# EUROPEAN PATENT APPLICATION

(11) **EP 4 827 058 A1**
(43) Date of publication of application: **21.10.2026**
(21) Application number: 24914973.3
(22) Date of filing: 25.10.2024
(51) Int. Cl.: H04L 27/26

(54) **COMMUNICATION METHOD AND APPARATUS**

(30) Priority: 04.01.2024 CN 202410026605
(71) Applicant: Huawei Technologies Co., Ltd., Shenzhen, Guangdong 518129 (CN)
(72) Inventor: LIU, Lei, Shenzhen, Guangdong 518129 (CN); BI, Xiaoyan, Shenzhen, Guangdong 518129 (CN)
(74) Representative: Goddar, Heinz J.
(86) International application number: PCT/CN2024/127419
(87) International publication number: WO 2025/145756

(57) **Abstract**

Embodiments of this application relate to the field of communication technologies, and provide a communication method and apparatus. The method includes: A terminal receives first indication information, and determines a second sequence based on first position information indicated by the first indication information and a first sequence, where the first sequence and the first position information satisfy a first relationship. The first position information is position information of a first resource used to map a first reference signal. That the second sequence is used to generate the first reference signal may alternatively be described as that the second sequence corresponds to the first reference signal. Because the second sequence is generated based on the first position information, adaptation between a reference signal sequence and a resource can be improved. In this way, the reference signal sequence can be applied to non-uniformly distributed resources.

## Description

### CROSS-REFERENCE TO RELATED APPLICATIONS

This application claims priority to Chinese Patent Application No. 202410026605.1, filed with the China National Intellectual Property Administration on January 4, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A Zadoff-Chu (Zadoff-Chu, ZC) sequence (sequence) may be used to generate various reference signal sequences, for example, a sounding reference signal (sounding reference signal, SRS) sequence. Currently, a manner of generating a reference signal sequence and performing resource mapping is: generating a ZC sequence corresponding to a reference signal as the reference signal sequence, and mapping the reference signal sequence to uniformly arranged resources, so that the reference signal corresponding to the reference signal sequence is sent or received. Because the ZC sequence has a constant envelope, power of a signal corresponding to the ZC sequence is constant. Resources for the reference signal are uniformly arranged in frequency domain. Therefore, it can be ensured that a time domain signal of the reference signal corresponding to the generated reference signal sequence is also a constant envelope, enabling the reference signal to have a low peak to average power ratio (peak to average power ratio, PAPR).

As the antenna scale increases, a quantity of reference signal ports also increases correspondingly. Continuing to use uniformly distributed reference signal resources causes high resource overheads. To reduce the resource overheads, a design of non-uniformly distributed reference signal resources is proposed. For the non-uniformly distributed reference signal resources, how to design a reference signal sequence that matches the non-uniformly distributed reference signal resources is an urgent problem to be resolved.

### SUMMARY

Embodiments of this application provide a communication method and apparatus, to provide a generation manner applicable to a reference signal sequence under non-uniformly arranged resources.

According to a first aspect, an embodiment of this application provides a communication method. The method may be performed by a first communication apparatus. The first communication apparatus may be a terminal device, a software or hardware module (chip) in a terminal device, or a combined device or component configured to implement a function of a terminal device. For example, the first communication apparatus is a terminal device, or the first communication apparatus is a unit/module, a circuit, a chip, or the like in a terminal device. The following describes the method provided in the first aspect by using an example in which the first communication apparatus is the terminal device. The method includes: The terminal device receives first indication information, and determines a second sequence based on first position information indicated by the first indication information and a first sequence. The first sequence and the first position information satisfy a first relationship. The first position information is position information of a first resource used to map a first reference signal. That the second sequence is used to generate the first reference signal may alternatively be described as that the second sequence corresponds to the first reference signal.

It should be understood that the first resource may also be referred to as a reference signal resource or a resource for a reference signal. The first position information may also be considered as a pattern of the first resource. The first position information may indicate a position of the first resource, and that the first position information and the first sequence satisfy the first relationship may alternatively be described as that the position of the first resource and the first sequence satisfy the first relationship. The first relationship may be represented in a form of a function relationship, a sequence, a table, or the like. This is not specifically limited herein. The first reference signal is, for example, an uplink reference signal or a downlink reference signal. If the first reference signal is an uplink reference signal, the terminal device may send the first reference signal on the first resource; or if the first reference signal is a downlink reference signal, the terminal device may receive the first reference signal on the first resource.

In this embodiment of this application, that the first sequence and the first position information satisfy the first relationship is that the first position information of the first resource is considered when the first sequence is generated. The second sequence is generated based on the first position information and the first sequence, that is, the first position information of the first resource is also considered when the second sequence is generated, so that the second sequence adapts to the first resource. A type of the first resource (for example, a first resource non-uniformly arranged in frequency domain or a first resource uniformly arranged in frequency domain) is not limited in embodiments of this application. In this way, a generation method applicable to a second sequence under non-uniformly arranged resources is provided, and the method provided in this embodiment of this application may be used to generate second sequences corresponding to different types of first resources. In other words, the method provided in this embodiment of this application has good universality. In addition, according to the first relationship, a PAPR of a time domain signal of the reference signal corresponding to the second sequence mapped to the first resource may be low. In other words, according to the first relationship, a PAPR of a time domain signal of the reference signal corresponding to the second sequence generated on the first resource non-uniformly arranged in frequency domain or the first resource uniformly arranged in frequency domain is low.

In a possible implementation, the first relationship may also be preconfigured or predefined in the terminal device, or may be determined by the terminal device through negotiation with the network device, or may be predefined in a protocol. Alternatively, the method further includes: receiving second indication information. The second indication information indicates the first relationship.

In the foregoing implementation, a plurality of manners of obtaining the first relationship by the terminal device are provided. When the first relationship is preconfigured or predefined by the terminal device, an amount of exchange between the terminal device and the network device can be reduced. Alternatively, when the terminal device obtains the first relationship from the network device, an amount of information pre-stored in the terminal device may be reduced, and the first relationship may be flexibly adjusted.

In a possible implementation, the first relationship indicates one of the following: a phase of the first sequence is a quadratic polynomial of the first position information; or a change rate of a phase of the first sequence with respect to the first position information is a linear polynomial of the first position information. The change rate of the phase of the first sequence with respect to the first position information may also be expressed as the change rate of the phase of the first sequence relative to the first position information.

In the foregoing implementation, a possible implementation of the relationship between the first sequence and the first position information is provided. The first relationship enables that the first position information corresponding to the first resource is considered when the first sequence is generated, and the foregoing two implementations of the first relationship enable the phase of the first sequence and the first position information to satisfy a quadratic polynomial relationship rather than a linear polynomial relationship. This can avoid a peak occurring in the time domain signal of the reference signal corresponding to the second sequence that is mapped to the first resource and that is generated based on the first sequence, that is, there is a low PAPR. When the first resource is uniformly distributed, the reference signal corresponding to the second sequence may have a PAPR as low as that of the ZC sequence. When the first resource is non-uniformly distributed, the ZC sequence and the first position information may satisfy a linear polynomial relationship. Therefore, a time domain signal of a corresponding reference signal has a peak, that is, there is a high PAPR, and a PAPR of a reference signal corresponding to the second sequence adapted to the first resource is significantly lower than that of the ZC sequence.

In a possible implementation, the first position information includes: relative position information of M resources included in the first resource; and/or absolute position information of the M resources included in the first resource, where M is a positive integer. Alternatively, it may be described as that the first position information may be used to describe relative positions of M resources and/or absolute positions of the M resources.

In the foregoing implementation, the first position information may be implemented in a plurality of manners, so that the network device indicates the first position information in a more flexible manner. Correspondingly, the terminal device determines the first position information in a more flexible manner.

In a possible implementation, the first position information is represented by using a polynomial of degree D, and D is an integer greater than or equal to 1. For example, the first position information (or may be described as positions of the M resources, or the absolute positions of the M resources, or the relative positions of the M resources) may be represented by using a quadratic polynomial. Certainly, the first position information may alternatively be represented in a form, for example, a table or a data group. This is not specifically limited herein.

In the foregoing implementation, the first position information is represented by using the polynomial of degree D. This can meet a case in which the first resource is uniformly arranged resources or non-uniformly arranged resources, that is, the first position information represented by using the polynomial of degree D may be adapted to positions of a plurality of types of resources.

In a possible implementation, the first indication information includes one or more of the following: a part or all of coefficients of the polynomial of degree D; a highest degree of the polynomial of degree D; or a quantity of resources included in the first resource.

In the foregoing implementation, the network device does not need to directly indicate a position index of the first resource to the terminal device, but may indicate information related to the polynomial of degree D. This can reduce an amount of indicated information to some extent, that is, reduce an amount of information exchanged between the network device and the terminal device.

In a possible implementation, the phase of the first sequence is represented by using a polynomial of degree H, and H is an integer greater than or equal to 2. Certainly, the phase of the first sequence may alternatively be represented in various forms such as a table or a data group. This is not specifically limited herein.

In the foregoing implementation, a manner of representing the phase of the first sequence is provided. The phase is represented by using the polynomial of degree H, so that the terminal device can determine the first sequence based on the first position information.

In a possible implementation, the second indication information includes one or more of the following: a part or all of coefficients of a quadratic polynomial; a root index of the second sequence; or at least one first parameter, where a phase of the first sequence is the quadratic polynomial of the first position information, and the root index and the at least one first parameter are used to determine the part or all of the coefficients of the quadratic polynomial.

In the foregoing implementation, the second indication information indicates the first relationship, and may specifically indicate information related to the quadratic polynomial without indicating all content of the first sequence, thereby reducing an amount of information exchanged between the network device and the terminal device.

In a possible implementation, the first position information includes the relative position information of the M resources included in the first resource, and the method further includes: receiving third indication information, where the third indication information indicates a reference position, and the reference position and the relative position information of the M resources included in the first resource are used to determine the absolute position information of the M resources included in the first resource.

In the foregoing implementation, the third indication information may indicate the reference position, so that the terminal device determines the absolute position information of the first resource based on the reference position and the relative position information, that is, determines the absolute position of the first resource.

In a possible implementation, the relative position information indicates M relative indexes of the M resources included in the first resource, and the absolute position information indicates M absolute indexes of the M resources included in the first resource; and a value of an index of the reference position is less than or equal to a value of an absolute index of a start position of the first resource, where a value of an i^{th} absolute index in the M absolute indexes is a sum of the value of the index of the reference position and a value of an i^{th} relative index in the M relative indexes, and i is an integer greater than or equal to 0; or a value of an index of the reference position is greater than or equal to a value of an absolute index of an end position of the first resource, where a value of an i^{th} absolute index in the M absolute indexes is a difference between the value of the index of the reference position and a value of an i^{th} relative index in the M relative indexes, where i is an integer greater than or equal to 0.

In the foregoing implementation, the network device may flexibly indicate the reference index, and the terminal device may also flexibly determine the absolute index based on the reference index and the relative index.

In a possible implementation, the method further includes: mapping a k^{th} element in the second sequence to a k^{th} resource in the first resource, where k is a natural number; or mapping a k^{th} element in the sorted second sequence to a k^{th} resource in the sorted first resource, where k is a natural number.

It should be understood that mapping the k^{th} element in the second sequence to the k^{th} resource in the first resource may be understood as one-to-one correspondence/mapping between M elements in the second sequence and the positions (or the M resources) of the M resources. How to perform mapping is not limited in embodiments of this application, provided that the terminal device and the network device have a consistent understanding of a manner of mapping the second sequence to the first resource. Alternatively, that the k^{th} element in the sorted second sequence is mapped to the k^{th} resource in the sorted first resource may be understood as one-to-one correspondence/mapping between the k^{th} element in the sorted second sequence and the M resources in the sorted first resource.

In the foregoing implementation, the mapping relationship between the element included in the second sequence and the resource included in the first resource may be flexible, so that a manner of mapping the element included in the second sequence is more flexible.

In a possible implementation, the sorted second sequence is obtained by sorting the second sequence based on indexes of elements; and the sorted first resource is obtained through sorting based on resource indexes or resource numbers.

For example, if the second sequence includes the M elements, the sorted second sequence may be obtained by sorting numbers of the M elements in the second sequence in ascending or descending order. The first resource includes the M resources. In this case, the sorted first resource may be obtained by sorting numbers of the M resources in ascending or descending order, or the sorted first resource may be obtained by sorting indexes of the M resources in ascending or descending order. For example, the indexes of the M resources are represented by using a polynomial P(n), and n may be understood as numbers corresponding to the M resources. For example, when a value of n is 1, P(1) indicates an index of one of the M resources, and 1 may indicate a number corresponding to the resource. In addition, the second sequence is represented by using S(n), and n may also be understood as numbers corresponding to the M elements.

In the foregoing implementation, a plurality of manners of mapping the second sequence to the first resource are provided, thereby improving flexibility of mapping the second sequence to the resource.

In a possible implementation, the first relationship includes a relationship between a first parameter set and a second parameter set, the first parameter set is used to generate the first position information, the second parameter set is used to generate the first sequence, and the method further includes: determining the second parameter set based on the first parameter set and the first relationship; determining the first sequence based on the second parameter set; and determining the second sequence based on the first sequence and the second parameter set. In the foregoing implementation, a specific manner of generating the second sequence is provided.

According to a second aspect, an embodiment of this application provides a communication method. The method may be performed by a second communication apparatus. The second communication apparatus may be a network device, a software or hardware module (chip) in a network device, or a combined device or component configured to implement a function of a network device. For example, the second communication apparatus is a network device, or the second communication apparatus is a unit/module, a circuit, a chip, or the like in a network device. The following describes the method provided in the second aspect by using an example in which the second communication apparatus is the network device. The method includes: receiving first indication information, where the first indication information indicates first position information of a first resource, and the first resource is used to map a first reference signal; and receiving the first reference signal on the first resource, or sending the first reference signal on the first resource, where a second sequence corresponding to the first reference signal is associated with a first sequence and the first position information, and the first sequence and the first position information satisfy a first relationship.

In a possible implementation, the method further includes: sending second indication information, where the second indication information indicates the first relationship.

In a possible implementation, the first relationship indicates one of the following: a phase of the first sequence is a quadratic polynomial of the first position information; or a change rate of a phase of the first sequence with respect to the first position information is a linear polynomial of the first position information.

In a possible implementation, the first position information includes: relative position information of M resources included in the first resource; and/or absolute position information of the M resources included in the first resource, where M is a positive integer.

In a possible implementation, the first position information is represented by using a polynomial of degree D, and D is an integer greater than or equal to 1.

In a possible implementation, the first indication information includes one or more of the following: a part or all of coefficients of the polynomial of degree D; a highest degree of the polynomial of degree D; or a quantity of resources included in the first resource.

In a possible implementation, the phase of the first sequence is represented by using a polynomial of degree H, and H is an integer greater than or equal to 2.

In a possible implementation, the second indication information includes one or more of the following: a part or all of coefficients of a quadratic polynomial; a root index of the second sequence; or at least one first parameter, where a phase of the first sequence is the quadratic polynomial of the first position information, and the root index and the at least one first parameter are used to determine the part or all of the coefficients of the quadratic polynomial.

In a possible implementation, the first position information includes the relative position information of the resources included in the first resource, and the method further includes: sending third indication information, where the third indication information indicates a reference position, and the reference position and the relative position information of the resources included in the first resource are used to determine the absolute position information of the resources included in the first resource.

In a possible implementation, the relative position information indicates M relative indexes of the M resources included in the first resource, and the absolute position information indicates M absolute indexes of the M resources included in the first resource; and a value of an index of the reference position is less than or equal to a value of an absolute index of a start position of the first resource, where a value of an i^{th} absolute index in the M absolute indexes is a sum of the value of the index of the reference position and a value of an i^{th} relative index in the M relative indexes, and i is an integer greater than or equal to 0; or a value of an index of the reference position is greater than or equal to a value of an absolute index of an end position of the first resource, where a value of an i^{th} absolute index in the M absolute indexes is a difference between the value of the index of the reference position and a value of an i^{th} relative index in the M relative indexes, where i is an integer greater than or equal to 0.

In a possible implementation, the method further includes: mapping a k^{th} element in the second sequence to a k^{th} resource in the first resource, where k is a natural number; or mapping a k^{th} element in the sorted second sequence to a k^{th} resource in the sorted first resource, where k is a natural number.

In a possible implementation, the sorted second sequence is obtained by sorting the second sequence based on indexes of elements; and the sorted first resource is obtained through sorting based on resource indexes or numbers.

In a possible implementation, the first relationship includes a relationship between a first parameter set and a second parameter set, the first parameter set is used to generate the first position information, the second parameter set is used to generate the first sequence, and the method further includes: determining the second parameter set based on the first parameter set and the first relationship; determining the first sequence based on the second parameter set; and determining the second sequence based on the first sequence and the second parameter set.

According to a third aspect, an embodiment of this application provides a communication apparatus. The communication apparatus may be the first communication apparatus in the first aspect, or a software or hardware module configured in the first communication apparatus, or a system including the first communication apparatus, or the like. The communication apparatus includes a corresponding means (means) or module configured to perform the first aspect or any possible implementation. For example, the communication apparatus includes a processing module (sometimes also referred to as a processing unit) and a transceiver module (sometimes also referred to as a transceiver unit).

For example, the transceiver module is configured to receive first indication information, and the processing module is configured to determine a second sequence based on first position information indicated by the first indication information and a first sequence.

The communication apparatus may further perform the method in any possible implementation of the first aspect. Details are not listed herein one by one.

According to a fourth aspect, an embodiment of this application provides a communication apparatus. The communication apparatus may be the second communication apparatus in the second aspect, or a software or hardware module configured in the second communication apparatus, or a system including the second communication apparatus, or the like. The communication apparatus includes a corresponding means (means) or module configured to perform the second aspect or any possible implementation. For example, the communication apparatus includes a processing module (sometimes also referred to as a processing unit) and a transceiver module (sometimes also referred to as a transceiver unit).

For example, the transceiver module is configured to: under control of the processing module, send first indication information, and receive a first reference signal on a first resource, or send the first reference signal on the first resource.

The communication apparatus may further perform the method in any possible implementation of the second aspect. Details are not listed herein one by one.

According to a fifth aspect, an embodiment of this application provides a processing apparatus. The processing apparatus includes a processor and an interface circuit. The interface circuit is configured to receive a signal from an apparatus other than the processing apparatus and transmit the signal to the processor, or send a signal from the processor to an apparatus other than the processing apparatus. The processor is configured to implement the method in any one of the first aspect and the possible implementations or the second aspect and the possible implementations by using a logic circuit or executing code instructions. The another apparatus is an apparatus other than the processing apparatus.

In a specific implementation process, the processing apparatus may be a chip, and the processor may be a transistor, a gate circuit, a trigger, various logic circuits, or the like. A specific implementation of the processor is not limited in embodiments of this application.

In an implementation, the processing apparatus may be a wireless communication device, to be specific, a computer device supporting a wireless communication function. Specifically, the wireless communication device may be a terminal device, for example, a smartphone, or may be a network device, for example, a radio access network device (such as a base station).

In still another implementation, the processing apparatus may be a part of devices in the wireless communication device, for example, an integrated circuit product like the system chip or the communication chip. The system chip may also be referred to as a system on chip (system on chip, SoC), or briefly referred to as a SoC chip. The communication chip may include a baseband processing chip and a radio frequency processing chip. The baseband processing chip is also sometimes referred to as a modem (modem) or a baseband chip. The radio frequency processing chip is also sometimes referred to as a radio frequency transceiver (transceiver) or a radio frequency chip. In a physical implementation, some or all chips of the communication chip may be integrated into the SoC chip. For example, the baseband processing chip is integrated into the SoC chip, but the radio frequency processing chip is not integrated into the SoC chip. The interface circuit may be the radio frequency processing chip in the wireless communication device, and the processor may be the baseband processing chip in the wireless communication device. The interface circuit may be an input/output interface, an interface circuit, an output circuit, an input circuit, a pin, a related circuit, or the like in the chip or a chip system. The processor may alternatively be embodied as a processing circuit or a logic circuit.

In yet another implementation, the processing apparatus may be a chip system. The chip system may include a chip, or may include a chip and another discrete device. The chip system may include, for example, a field programmable gate array (field programmable gate array, FPGA), an application specific integrated circuit (application specific integrated circuit, ASIC), a system chip (system on chip, SoC), a central processing unit (central processing unit, CPU), a network processor (network processor, NP), a digital signal processor (digital signal processor, DSP), a micro controller unit (micro controller unit, MCU), a programming controller (programmable logic device, PLD), or another integrated chip.

According to a sixth aspect, an embodiment of this application provides a processing apparatus. An embodiment of this application provides a processing apparatus. The processing apparatus includes a processor. When the processing apparatus runs, the processor performs the method in any one of the first aspect and the possible implementations or the second aspect and the possible implementations. Optionally, the processing apparatus further includes a memory. The memory stores one or more computer programs, and the processor may execute the one or more computer programs, to implement the method in any one of the first aspect and the possible implementations or the second aspect and the possible implementations.

Optionally, the processing apparatus further includes other components such as an antenna, an input/output module, and an interface (for example, a communication interface). The components may be hardware, software, or a combination of software and hardware.

According to a seventh aspect, an embodiment of this application provides a communication system. The communication system includes a terminal device and a network device. The terminal device is configured to implement a function of any method in any one of the first aspect and the possible implementations, and the network device is configured to implement a function of any method in any one of the second aspect and the possible implementations.

According to an eighth aspect, an embodiment of this application further provides a chip system. The chip system includes a processor. Optionally, the chip system may further include an interface (for example, a communication interface). The processor may be configured to implement the method in any one of the first aspect and the possible implementations or the second aspect and the possible implementations. Optionally, the chip system further includes the memory. The memory is configured to store a computer program (which may also be referred to as code or instructions). The processor is configured to invoke the computer program from the memory and run the computer program, so that a device in which the chip system is mounted performs the method in any one of the first aspect and the possible implementations or the second aspect and the possible implementations. For an implementation of the chip system, refer to the foregoing content of the chip system. Details are not described herein again.

According to a ninth aspect, an embodiment of this application provides a computer-readable storage medium. The computer-readable storage medium is configured to store a computer program or instructions. When the computer program or the instructions are run, the method in any one of the first aspect and the possible implementations or the second aspect and the possible implementations is implemented.

According to a tenth aspect, an embodiment of this application provides a computer program product. When the computer program product runs on a computer, the method in any one of the first aspect and the possible implementations or the second aspect and the possible implementations is implemented.

For example, the computer program product includes a computer program, and when the computer program runs on a computer, the computer is enabled to perform the method in any one of the first aspect and the possible implementations or the second aspect and the possible implementations. Alternatively, the computer program product includes instructions, and when the instructions are run on a computer, the computer is enabled to perform the method in any one of the first aspect and the possible implementations or the second aspect and the possible implementations.

For beneficial effects of any one of the technical solutions in the second aspect to the tenth aspect, refer to the beneficial effects of the corresponding technical solution in the first aspect. Repeated content is not listed herein again.

### BRIEF DESCRIPTION OF DRAWINGS

FIG. 1 is a diagram of a communication system to which an embodiment of this application is applicable;
FIG. 2a, FIG. 2b, and FIG. 2c are diagrams of resources for a reference signal;
FIG. 3 is a diagram of reference signal resources uniformly arranged in frequency domain;
FIG. 4 is a diagram of reference signal resources non-uniformly arranged in frequency domain;
FIG. 5 is a diagram of a reference signal in time domain in a case of the resources shown in FIG. 3;
FIG. 6 is a diagram of a reference signal in time domain in a case of the resources shown in FIG. 4;
FIG. 7 is a diagram of a structure of another communication system to which an embodiment of this application is applicable;
FIG. 8 is a diagram of protocol stacks of a terminal device and an access network device to which an embodiment of this application is applicable;
FIG. 9 is a diagram of a structure of still another communication system to which an embodiment of this application is applicable;
FIG. 10 is a diagram of a structure of still another communication system to which an embodiment of this application is applicable;
FIG. 11 is a diagram of a structure of still another communication system to which an embodiment of this application is applicable;
FIG. 12 is a diagram of a communication method according to an embodiment of this application;
FIG. 13a and FIG. 13b are diagrams of first resources according to an embodiment of this application;
FIG. 14a and FIG. 14b are diagrams of a relationship between a reference index, M absolute indexes, and M relative indexes according to an embodiment of this application;
FIG. 15 is a diagram of another communication method according to an embodiment of this application;
FIG. 16 is a diagram of a structure of a communication apparatus according to an embodiment of this application;
FIG. 17 is a diagram of a structure of a processing apparatus according to an embodiment of this application; and
FIG. 18 is a diagram of a structure of another processing apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
1. A reference signal (reference signal, RS), also referred to as a pilot signal or a pilot, is a known signal. For example, a reference signal may be a known signal provided by a transmit end to a receive end for channel estimation, channel sounding, data demodulation, or the like. Reference signals may include uplink reference signals and downlink reference signals. Uplink reference signals include, for example, a demodulation reference signal (demodulation reference signal, DMRS) and a sounding reference signal (sounding reference signal, SRS). For example, the DMRS may include a DMRS used for physical uplink control channel (physical uplink control channel, PUCCH) demodulation (which may be referred to as a DMRS for PUCCH for short) and a DMRS used for physical uplink control channel (physical uplink share channel, PUSCH) demodulation (which may be referred to as a DMRS for PUCCH for short). The downlink reference signals include, for example, a channel state information-reference signal (channel state information-reference signal, CSI-RS), a cell-specific reference signal (cell-specific reference signal, C-RS/CRS), and a positioning reference signal (positioning reference signal, P-RS/PRS). It should be understood that there are a plurality types of reference signals. With continuous evolution of a standard, names of the foregoing reference signals may change, and more reference signals may appear. This is not specifically limited herein.
2. A peak to average power ratio (peak to average power ratio, PAPR) is a ratio of probabilistic peak power to total average power of a system. A radio signal is a sine wave with a continuously changing amplitude in time domain, and the amplitude is not constant. An amplitude peak of the signal in one cycle is different from that in another cycle. Therefore, average power and peak power in each cycle vary. Maximum transient power that occurs at a specific probability in a long period of time may be referred to as the probabilistic peak power. Optionally, the probability may be 0.01% (that is, 10^⁻⁴).
3. A resource includes a time domain resource and/or a frequency domain resource. The time domain resource and the frequency domain resource may also be referred to as a time-frequency resource.

The time domain resource is a resource in time domain, and includes a symbol (symbol), a slot (slot), a mini-slot (mini-slot), a partial slot (partial slot), a sub-frame (sub-frame), a radio frame (frame) (or referred to as a frame), a sensing slot (sensing slot), or the like.

One slot may include at least one symbol (symbol), for example, 14 symbols or 12 symbols. There may be different types of slots, and quantities of symbols included in the different types of slots are different. For example, the mini-slot (mini slot) includes symbols whose quantity is less than 7, for example, two symbols, three symbols, or four symbols, and a common slot (slot) includes seven symbols or 14 symbols. The symbol may be, for example, an orthogonal frequency division multiplexing (orthogonal frequency division multiplexing, OFDM) symbol.

Based on different subcarrier spacings, symbol lengths may be different. Therefore, slot lengths may be different. For example, a length of a slot corresponding to a subcarrier spacing of 15 kHz is 0.5 ms, and a length of a slot corresponding to a subcarrier spacing of 60 kHz is 0.125 ms.

The frequency domain resource is a resource in frequency domain. The frequency domain resource includes a subchannel, a band (band), a carrier (carrier), a bandwidth part (bandwidth part, BWP), a resource block (resource block, RB), a resource pool, or the like.

In frequency domain, one RB may include several subcarriers. For example, in LTE and NR systems, one RB includes 12 subcarriers, and each subcarrier spacing may be 15 kHz. Certainly, another subcarrier spacing may alternatively be used, for example, a subcarrier spacing of 3.75 kHz, 30 kHz, 60 kHz, or 120 kHz. This is not limited herein. For the subcarrier (subcarrier) or a resource element (resource element, RE), the subcarrier or the RE is a minimum frequency resource element on a specific symbol in a multicarrier system. The RE may be a time-frequency resource element, for example, may be considered as a minimum time-frequency resource element. For example, one RE occupies one symbol in time domain, and occupies one subcarrier in frequency domain. In other words, one subcarrier in one symbol in time domain is one RE.

In addition, the resource element mentioned in embodiments of this application may be a resource division unit. If resources include only a time domain resource, the resource element may be considered as a time domain unit, and the time domain unit may be understood as a time domain resource division unit, for example, may be a slot, a symbol, or a mini-slot. This is not specifically limited. Alternatively, if resources include a frequency domain resource, the resource element may be considered as a frequency domain unit, and the frequency domain unit may be understood as a frequency domain resource division unit, for example, an RB. Alternatively, if resources include a time domain resource and a frequency domain resource, the resource element may be considered as a combination of a time domain unit and a frequency domain unit.

4. A reference signal resource is a resource used to map (or transmit) a reference signal. In embodiments of this application, a resource used to transmit (or map) a first reference signal may be referred to as a first resource, a reference signal resource, a resource for a reference signal, or the like. That the first resource is used for the first reference signal may alternatively be described as that the first resource is used to transmit the first reference signal (specifically, for example, sending the first reference signal or receiving the first reference signal). In other words, the first resource is the resource used to map the first reference signal. The first resource may be a frequency domain resource, a time domain resource, a time-frequency resource, or the like. This is not specifically limited herein.

5. A first sequence is a sequence used to generate a sequence (or referred to as a reference signal sequence) of a reference signal (for example, a first reference signal), and may be considered as a base sequence used to generate the first reference signal. Optionally, the first sequence may be represented by using a plurality of values, or the like, or a phase of the first sequence may be represented by using a polynomial of degree H, where H is an integer greater than 2. The sequence of the first reference signal may also be referred to as a second sequence, or may be referred to as the reference signal sequence, and the second sequence is used to generate the first reference signal. The second sequence and the first sequence may be the same or different. This is not limited herein.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, a and b, a and c, b and c, or a, b, and c, where a, b, and c may be singular or plural.

Ordinal numbers such as "first" and "second" in embodiments of this application are intended to distinguish between a plurality of objects, but are not intended to limit sizes, content, an order, a time sequence, priorities, importance degrees, or the like of the plurality of objects. For example, the first sequence and the second sequence are two different sequences, and do not indicate different content, priorities, importance degrees, or the like of the two sequences. For a type of technical feature, technical features in the type of technical feature are distinguished by using "A", "B", "C", "D", and the like, and there is no sequence or order between the technical features described by "A", "B", "C", and "D".

In embodiments of this application, "when", "as if", and "if' all mean that an apparatus performs corresponding processing in an objective case, are not intended to limit time, do not require the apparatus to necessarily have a determining action during implementation, and do not mean another limitation. Unless otherwise specified, "if' and "in case" are interchangeable, and "when" and "in a case of' are interchangeable. "When" and "if'/"in case" are interchangeable.

In embodiments of this application, an "indication" may include a direct indication, an indirect indication, an explicit indication, and an implicit indication. When a piece of indication information is described as indicating A, it may be understood that the indication information carries A, directly indicates A, or indirectly indicates A. In this application, information indicated by indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information to be sent separately, where sending periodicities and/or sending occasions of these pieces of sub-information may be the same or different.

In embodiments of this application, "sending" and "receiving" represent signal transfer directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. The "sending" may alternatively be understood as "outputting" of a chip interface, and the "receiving" may alternatively be understood as "inputting" of the chip interface. In other words, sending and receiving may be performed between devices, for example, between a network device and a terminal device; or may be performed inside a device, for example, sending or receiving between components, modules, chips, software modules, or hardware modules inside the device through a bus, a cable, or an interface.

In embodiments of this application, the term like "example" or "for example" is used to represent giving an example, an illustration, or a description. Any embodiment or design scheme described as an "example" or "for example" in this application should not be explained as being more preferred or having more advantages than another embodiment or design scheme. To be precise, use of the words such as "example" or "for example" is intended to present a relative concept in a specific manner.

The technical solutions provided in embodiments of this application may be applied to a communication system related to the 3rd generation partnership project (the 3rd generation partnership project, 3GPP), for example, a long term evolution (long term evolution, LTE) communication system or a 5^{th} generation (5^{th} generation, 5G) mobile communication system (specifically, a new radio (new radio, NR) communication system, or an NR communication system in which a multiple-input multiple-output (multi-input multi-output, MIMO) technology is introduced), or may be applied to another next generation mobile communication system, for example, a 6th generation (6G) communication system, another similar communication system, or a communication system in a future evolution process. The another similar communication system may include a wireless fidelity (wireless fidelity, Wi-Fi) system, a vehicle to everything (vehicle to everything, V2X) system, an internet of things (internet of things, IoT) system, a narrowband internet of things (narrowband internet of things, NB-IoT) system, an industrial internet system, or the like.

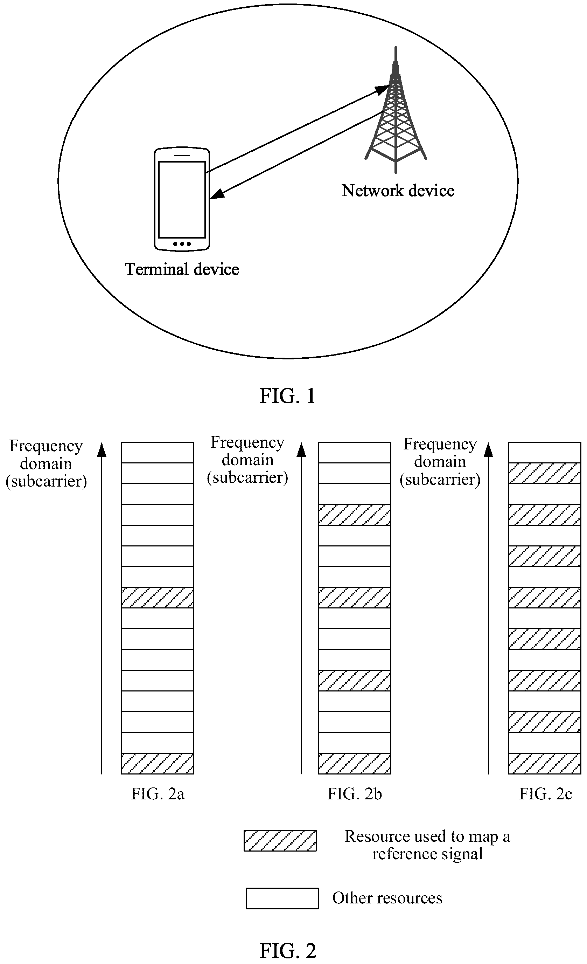

FIG. 1 is a diagram of a communication system to which an embodiment of this application is applicable. FIG. 1 shows a terminal device and a network device that communicates with the terminal device. FIG. 1 shows that a quantity of terminal devices is 1 and a quantity of network devices is 1. Actually, quantities of terminal devices and network devices are not limited. This is not limited herein.

The terminal device is a device having a wireless transceiver function, and may be a fixed device, a mobile device, a handheld device, a wearable device, a vehicle-mounted device, or a wireless apparatus (for example, a communication module or a chip system) built in the foregoing device. The terminal device is configured to connect a person, an object, a machine, and the like, and may be widely used in various scenarios, for example, including but not limited to terminal devices in the following scenarios: cellular communication, device-to-device (device-to-device, D2D) communication, vehicle-to-everything (vehicle to everything, V2X), machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self-driving (self driving), remote medical (remote medical), a smart grid (smart grid), smart furniture, a smart office, a smart wearable, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like.

The network device includes, for example, an access network device (or referred to as an access network element) and/or a core network device (or referred to as a core network element).

The access network device is a device having a wireless transceiver function, and is configured to communicate with the terminal device. The access network device includes but is not limited to a base station (BTS, NodeB, eNodeB/eNB, or gNodeB/gNB), a transmission reception point (transmission reception point, TRP), a base station evolved in a subsequent 3GPP, an access node in a wireless fidelity (wireless fidelity, Wi-Fi) system, a wireless relay node, a wireless backhaul node, a satellite, an unmanned aerial vehicle, or the like in the foregoing communication system. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. Alternatively, the access network device may be a radio controller in a cloud radio access network (cloud radio access network, C(R)AN) scenario, and the RAN may be an open access network (open RAN, O-RAN, or ORAN), a central unit (central unit, CU) (which may also be referred to as an aggregation unit), and/or a distributed unit (distributed unit, DU). The access network device may alternatively be a server, a wearable device, a vehicle-mounted device, or the like. For example, an access network device in a vehicle to everything (vehicle to everything, V2X) technology may be a road side unit (road side unit, RSU). The following uses an example in which the access network device is a base station for description. A plurality of access network devices in the communication system may be base stations of a same type, or may be base stations of different types. The base station may communicate with the terminal device, or may communicate with the terminal device via a relay station. The terminal device may communicate with the plurality of base stations in different access technologies.

In a possible architecture of the access network device, the access network device includes a central unit (central unit, CU) and/or a distributed unit (distributed unit, DU). The CU and the DU may be understood as division of the access network device from a perspective of logical functions. The CU and the DU may be physically separated, or may be deployed together. This is not specifically limited in embodiments of this application.

The access network device in embodiments of this application may alternatively be a central unit control plane (CU-CP) node or a central unit user plane (CU-UP) node, or may include a CU-CP and a CU-UP. The CU-CP is responsible for a control plane function, and mainly includes RRC and a PDCP-C. The PDCP-C is mainly responsible for data encryption and decryption, integrity protection, data transmission, and the like on the control plane. The CU-UP is responsible for a user plane function, and mainly includes an SDAP and PDCP-U. The SDAP is mainly responsible for processing data of the core network and mapping a flow (flow) to a bearer. The PDCP-U is mainly responsible for encryption and decryption, integrity protection, header compression, sequence number maintenance, data transmission, and the like on a data plane.

In different systems, the CU (including the CU-CP and the CU-UP) or the DU may also have different names, but a person skilled in the art may understand meanings thereof. For example, in an open radio access network (open radio access network, O-RAN) system, the CU may also be referred to as an O-CU (open CU), the DU may also be referred to as an O-DU, the CU-CP may also be referred to as an O-CU-CP, and the CU-UP may also be referred to as an O-CU-UP.

The core network device is configured to implement at least one of functions such as mobility management, data processing, session management, and policy and charging. Names of devices that implement core network functions in systems of different access technologies may be different. This is not limited in embodiments of this application. A 5G system is used as an example. The core network device includes an access and mobility management function (access and mobility management function, AMF), a session management function (session management function, SMF), a user plane function (user plane function, UPF), or the like.

In embodiments of this application, an apparatus configured to implement a function of the terminal device may be the terminal device, or may be an apparatus that can support the terminal device in implementing the function, for example, a chip system, a chip, or a combined device or component that can implement the function of the terminal device. The apparatus may be mounted in the terminal device. A specific technology and a specific device form that are used by the terminal device are not limited in embodiments of this application. Similarly, in embodiments of this application, an apparatus configured to implement a function of the network device may be the network device, or may be an apparatus, for example, a chip system, that can support the network device in implementing the function, and the apparatus may be mounted in the network device. In technical solutions provided in embodiments of this application, an example in which the apparatus configured to implement the function of the network device is a network device used for describing the technical solutions provided in embodiments of this application.

When information is sent between the network device and the terminal device, a characteristic of a channel (or may be described as a communication link or a transmission link) between the network device and the terminal device needs to be estimated, to perform modulation and coding and precoding on the to-be-sent information based on the characteristic. Information used to estimate the characteristic of the channel may be referred to as a reference signal, and a process of estimating the reference signal is also referred to as channel estimation. Both the network device and the terminal device may separately perform channel estimation. For example, the network device may estimate an uplink channel based on an uplink reference signal. The network device may further estimate a downlink channel based on the estimated uplink channel and reciprocity between the uplink channel and the downlink channel. Similarly, the terminal device may estimate a downlink channel based on a downlink reference signal, and may also estimate an uplink channel based on the estimated downlink channel and reciprocity between the uplink channel and the downlink channel.

The reference signal is transmitted through a resource (or may be referred to as a reference signal resource or a resource for a reference signal). An arrangement manner of resources for the reference signal is equal-interval arrangement/uniform distribution/uniform distribution in frequency domain. Alternatively, it may be described as that resources for a reference signal corresponding to one reference signal port (which may be referred to as a port for short) have a same frequency domain density. One reference signal port corresponds to one reference signal or one reference signal sequence, and the reference signal sequence is used to generate the reference signal.

The following describes, by using an example, resources, for a reference signal, that are arranged at an equal interval/uniformly distributed in frequency domain.

For example, frequency domain resources for a reference signal corresponding to a port pᵢ are in a comb K_{TC} form. In other words, one subcarrier in every adjacent K_{TC} subcarriers is used as a resource for a reference signal, and every two resources for the reference signal are spaced by K_{TC}-1 subcarriers. K_{TC} may be preconfigured or predefined, for example, may be predefined in a protocol.

FIG. 2a, FIG. 2b, and FIG. 2c are diagrams of resources for a reference signal. FIG. 2a, FIG. 2b, and FIG. 2c show 16 subcarriers in frequency domain. FIG. 2a shows an example in which K_{TC} is 8. There are eight subcarriers between two adjacent resources used to transmit the reference signal. As shown in FIG. 2a, starting from the bottom to the top, a 1^{st} subcarrier and a 9^{th} subcarrier are used to transmit the reference signal. FIG. 2b shows an example in which K_{TC} is 4. There are four subcarriers between two adjacent resources for the reference signal (or may be referred to as reference signal resources). As shown in FIG. 2b, starting from the bottom to the top, a 1^{st} subcarrier, a 5^{th} subcarrier, a 9^{th} subcarrier, and a 13^{th} subcarrier are all used to transmit the reference signal. FIG. 2c shows an example in which K_{TC} is 2. There are two subcarriers between two adjacent resources used to transmit the reference signal. As shown in FIG. 2c, starting from the bottom to the top, a 1^{st} subcarrier, a 3^{rd} subcarrier, a 5^{th} subcarrier, a 7^{th} subcarrier, a 9^{th} subcarrier, an 11^{th} subcarrier, a 13^{th} subcarrier, and a 15^{th} subcarrier are all used to transmit the reference signal.

A reference signal sequence corresponding to the reference signal may be designed based on a ZC sequence. For example, the ZC sequence is generated by performing cyclic shift on a base sequence. The ZC sequence satisfies the following relationship (1) to relationship (3): ${r}_{u , v}^{\left(α, δ\right)} \left(n\right) = {e}^{jαn} \overline{{r}_{u , v}} \left(n\right) , where 0 \leq n \leq {M}_{ZC}$ (1) $\overline{{r}_{u , v}} \left(n\right) = {x}_{q} \left(n mod {N}_{ZC}\right)$ (2) ${x}_{q} \left(m\right) = {e}^{- j \frac{πqm \left(m+1\right)}{{N}_{ZC}}}$ (3)

r̅_̅{̅u̅,̅v̅}̅(n) represents the ZC sequence, r̅_̅{̅u̅,̅v̅}̅(n) represents the ZC base sequence, α represents cyclic shift, and M_{ZC} represents a length of the ZC base sequence. ${M}_{ZC} = {mN}_{sc}^{RB} / {2}^{δ}$*,* where m represents a quantity of RBs, ${N}_{sc}^{RB}$ represents a quantity of subcarriers included in one RB, a total quantity of resources occupies ${mN}_{sc}^{RB}$ subcarriers, and a quantity of subcarriers to which the ZC sequence is mapped is 1/2^{δ} *of* the total quantity of resources, in other words, a length of the ZC sequence is $\frac{1}{{2}^{δ}}$ times of the total quantity of resources. *δ* = log₂(*K*_{TC}), where *K*_{TC} is a quantity of transmission combs. N_{ZC} represents a length of a root sequence, N_{ZC} is a maximum prime number less than or equal to M_{ZC}, n represents a number of the ZC sequence, u represents a group number, *u* ∈ {0, 1, ..., 29}, v represents a number in the group number, *v =* 0,1, and x_{q}(m) represents a q^{th} root sequence, where q represents a root index, and is used to distinguish between different root sequences in a group and root sequences in different groups. q may be determined by $q = \left⌊\overline{q}+1/2\right⌋ + v ∗ {\left(-1\right)}^{\left⌊2\overline{q}\right⌋}$ and *q̅ = N_{ZC} ** (*u* + 1)/31, and *q̅* is a parameter used to determine q.

The following describes, by using an example, a relationship (4) for determining the reference signal sequence (for example, an SRS sequence) based on the ZC sequence. The SRS sequence may be generated according to the following formula (4): ${r}^{\left({p}_{i}\right)} \left(n,l′\right) = {r}_{u , v}^{\left({α}_{i}, δ\right)} \left(n\right)$ (4) ${r}_{u , v}^{\left({α}_{i}, δ\right)} \left(n\right)$ is the ZC sequence, $0 \leq n \leq {M}_{sc , b}^{SRS} - 1$, and $l ′ ∈ \left\{0,1,…,{N}_{symb}^{SRS}-1\right\}$. *r*^{(*pᵢ*)}(*n, l'*) is an SRS sequence of a port *pᵢ* on an n^{th} SRS frequency domain resource and on an *l'*^{th} SRS time domain resource, and *δ* = log₂(*K*_{TC}), where *K*_{TC} is a quantity of transmission combs, ${N}_{symb}^{SRS}$ indicates a quantity of symbols occupied by an SRS, ${M}_{sc , b}^{SRS}$ indicates a quantity of subcarriers occupied by the SRS, or may indicate a length of the SRS sequence, *l'* indicates an *l'*^{th} symbol in the ${N}_{symb}^{SRS}$ symbols, n indicates an n^{th} subcarrier in the ${M}_{sc , b}^{SRS}$ subcarriers, *αᵢ* indicates cyclic shift of the port pi, *u* is a group number of a sequence group, for example, *u* ∈ {0, 1, ..., 29}, which indicates that there are 30 sequence groups, and *v* is a number in each sequence group, for example, *v* = 0,1.

As an antenna scale increases, a quantity of reference signal ports also increases correspondingly, and using a design of uniformly arranging resources for a reference signal in frequency domain causes high resource overheads. To reduce the resource overheads, another arrangement manner of the resources for the reference signal is proposed, that is, non-uniform arrangement is performed in frequency domain. In this case, channel estimation with high accuracy may also be obtained based on auxiliary information/prior information. The auxiliary information may be some information that is obtained in advance and that is used for channel estimation. That the resources are non-uniformly arranged in frequency domain may be that resources occupied by a reference signal sequence corresponding to each reference signal port are non-uniformly arranged in frequency domain and/or time domain, or there are at least two frequency domain densities of reference signal resources corresponding to one reference signal port. Different reference signal ports may have a same resource density or interval in frequency domain.

To improve power efficiency of the terminal device, a high power amplifier (high power amplifier, HPA) of the terminal device is required to work near a linear saturation region. Therefore, considering that transmit power of the terminal device is limited, a reference signal sequence is generally required to have a low PAPR. This is because, if the PAPR of the reference signal sequence is large, when the HPA works near a saturation point, a signal input into the HPA has a specific probability of entering a non-linear region, and non-linear distortion is generated, thereby affecting decoding accuracy of the network device.

For a ZC sequence, an amplitude/power of a signal of the ZC sequence with any length is constant, that is, the ZC sequence has a constant envelope property. After Fourier transform, the ZC sequence is still a ZC sequence. In other words, if a frequency domain signal is a ZC sequence, a time domain signal obtained after transform is still a ZC sequence. Therefore, after Fourier transform, the ZC sequence still has a constant envelope property. In this way, the ZC sequence is used as the reference signal sequence and mapped to reference signal resources uniformly arranged in frequency domain, so that a reference signal sequence with a low PAPR can be obtained.

However, if the ZC sequence is mapped to non-uniformly arranged resources, a peak may occur in time domain. This significantly increases the PAPR, causes distortion of a reference signal, and affects decoding accuracy of the network device.

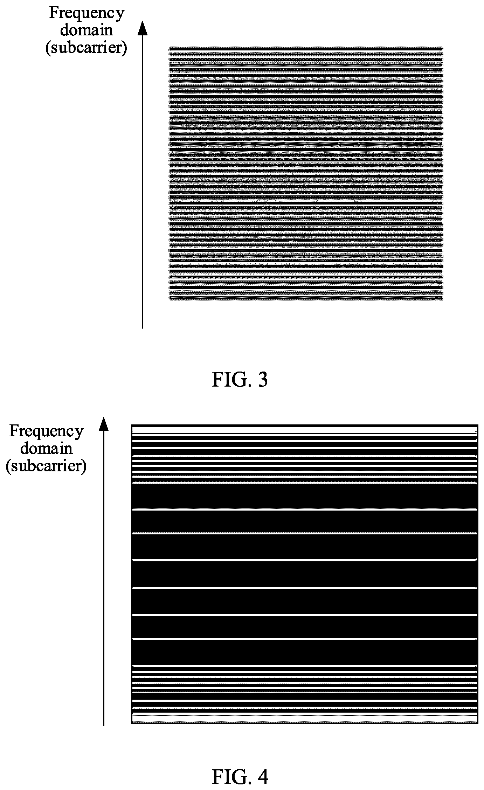

With reference to FIG. 3 to FIG. 6, the following describes, by using examples, signal situations in two arrangement manners of resources for a reference signal.

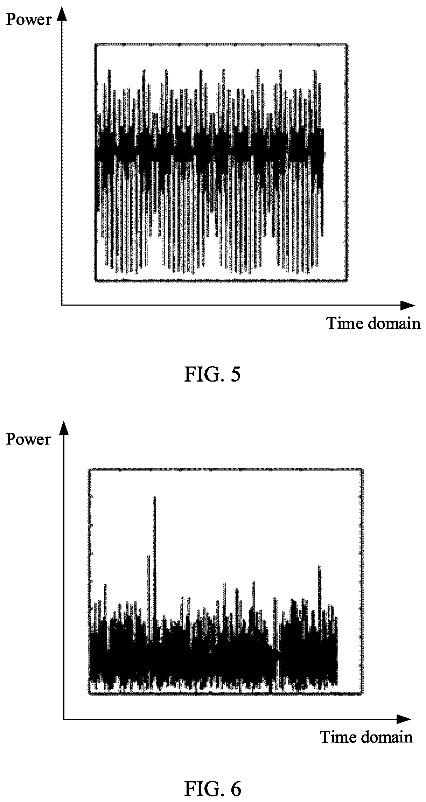

FIG. 3 is a diagram of reference signal resources uniformly arranged in frequency domain. FIG. 4 is a diagram of reference signal resources non-uniformly arranged in frequency domain. FIG. 5 is a diagram of a reference signal in time domain in a case of the resources shown in FIG. 3. FIG. 6 is a diagram of a reference signal in time domain in a case of the resources shown in FIG. 4. A vertical coordinate in FIG. 3 and FIG. 4 is, for example, a frequency domain (in a unit of a subcarrier). In FIG. 3 and FIG. 4, another resource is shown in black, and a reference signal resource is shown in white. A horizontal coordinate in FIG. 5 and FIG. 6 is, for example, a time domain, and a vertical coordinate is, for example, power.

It can be learned from FIG. 3 that a ZC sequence is mapped to reference signal resources uniformly arranged in frequency domain. As shown in FIG. 5, a PAPR of a time domain signal obtained after Fourier transform is performed on the ZC sequence is approximately equal to 2.7228 dB. It can be learned from FIG. 4 that the ZC sequence is mapped to reference signal resources non-uniformly arranged in frequency domain. As shown in FIG. 6, a PAPR of a time domain signal obtained after Fourier transform is performed on the ZC sequence is approximately equal to 12.9648 dB. It can be found by comparing FIG. 4 and FIG. 6 that the current design of the reference signal cannot be used to adapt to a design of resources that are of the reference signal and that are non-uniformly arranged.

In view of this, an embodiment of this application provides a communication method. In the method, a manner of generating a reference signal sequence (namely, a second sequence) is designed. In the method, the second sequence may be generated based on first position information of a resource for a reference signal and a first sequence. The first sequence and the first position information also satisfy a specific relationship (for example, a first relationship). This is equivalent to that the first position information of the resource for the reference signal is considered when the second sequence is generated, and therefore the generated second sequence can better adapt to a position of the resource (for example, a first resource) of the reference signal, and the second sequence can be applied to a design of resources that are of the reference signal and that are non-uniformly arranged.

In addition to the communication system shown in FIG. 1, the communication method provided in embodiments of this application may be further applied to another communication system. The following provides an example description with reference to the accompanying drawings.

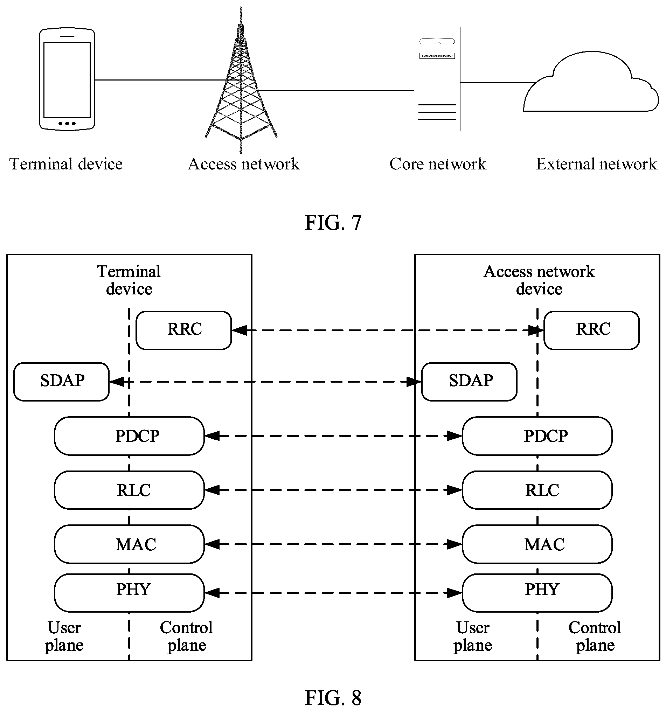

FIG. 7 is a diagram of a structure of another communication system to which an embodiment of this application is applicable. FIG. 7 shows a terminal device, an access network, a core network, and an external network. The terminal device shown in FIG. 7 is, for example, the terminal device in FIG. 1. The terminal device may access the external network sequentially via the access network and the core network. The access network may include one or more access network devices. The core network may include one or more core network devices. The one or more access network devices and/or the one or more core network devices are/is, for example, the network device in FIG. 1. The external network may be, for example, a data network (data network, DN). For content of the terminal device, content of the access network device, and content of the core network device, refer to the content described above. Details are not described herein again.

The following describes protocol stacks of the terminal device and the access network device with reference to a diagram of protocol stacks of the terminal device and the access network device shown in FIG. 8. The terminal device in FIG. 8 is, for example, the terminal device in FIG. 1 or FIG. 7, and the access network device is, for example, the network device in FIG. 1, and is, for example, the one or more access network devices in FIG. 7.

As shown in FIG. 8, a user plane protocol stack of the terminal device and a user plane protocol stack of the access network device may include a service data adaptation protocol stack (service data adaptation protocol, SDAP) layer, a packet data convergence protocol (packet data convergence protocol, PDCP) layer, a radio link control (radio link control, RLC) layer, a media access control (media access control, MAC) layer, and a physical layer (physical layer, PHY). The control plane protocol stack of the terminal device and the control plane protocol stack of the access network device may include a radio resource control (radio resource control, RRC) layer, a PDCP layer, an RLC layer, a MAC layer, and a PHY.

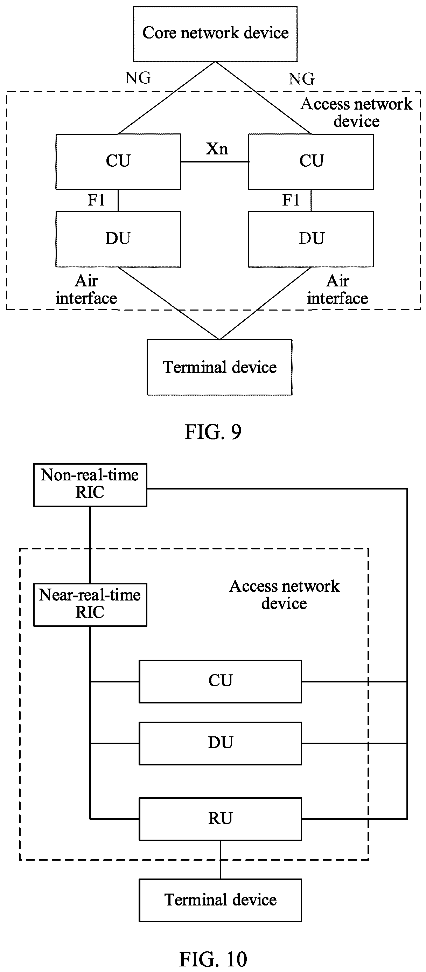

FIG. 9 is a diagram of a structure of still another communication system to which an embodiment of this application is applicable. As shown in FIG. 9, devices in the communication system are connected to each other through an interface (for example, NG or Xn) or an air interface. FIG. 9 shows a core network device, an access network device (for example, a RAN device), a terminal device, an operation, administration and operation (operation, administration and maintenance, OAM), and the like. The access network device in FIG. 9 is, for example, the network device in FIG. 1, or the access network device in FIG. 7 or FIG. 8. Different from FIG. 1 or FIG. 8, FIG. 9 further shows a diagram of a structure of the access network device.

The access network device may be used as an independent RAN node, or may include a plurality of RAN nodes, for example, include a CU and a DU. The CU and the DU may communicate with each other through an F1 interface. Optionally, the CU may be further split into a CU-CP and a CU-UP. At least one of the access network device, the core network device, the CU in the access network device, the DU in the access network device, the CU-CP in the access network device, or the CU-UP in the access network device in FIG. 9 may be considered as an example of the network device in FIG. 1.

In a possible design, the RRC layer, the SDAP layer, and the PDCP layer of the access network device may be deployed on the CU, and the RLC layer, the MAC layer, and the PHY of the access network device may be deployed on the DU.

FIG. 10 is a diagram of a structure of still another communication system to which an embodiment of this application is applicable. As shown in FIG. 10, the communication system includes a RAN intelligent controller (RAN intelligent controller, RIC). The RIC includes a near-real-time RIC (near-real-time RIC, near-RT RIC) and a non-real-time RIC (non-real-time RIC, Non-RT RIC). The non-real-time RIC mainly processes non-real-time information, for example, latency-insensitive data. A latency of the data may be at a second level. A real-time RIC mainly processes near-real-time information, for example, latency-sensitive data. A latency of the data is at a level of tens of milliseconds. Optionally, the near-real-time RIC and the non-real-time RIC each may alternatively be independently deployed as a network element.

The near-real-time RIC may obtain information about a network side and/or a terminal device from an access network device (for example, at least one of a CU, a DU, and an RU) and/or a terminal device. The access network device in FIG. 10 is, for example, the network device in FIG. 1, or the access network device in FIG. 7 or FIG. 8.

Optionally, the near-real-time RIC may process the information, and send a processing result to a RAN node and/or the terminal device. Optionally, the processing result may be exchanged between the CU and the DU and/or between the DU and the RU. For example, the near-real-time RIC delivers the processing result to the DU, and the DU sends the processing result to the RU.

The non-real-time RIC may obtain information about a network side and/or a terminal side from a radio access device (for example, at least one of a CU, a DU, and an RU) and/or a terminal device. Optionally, the non-real-time RIC may also process the information, and send a processing result to a RAN node and/or the terminal device. Optionally, the processing result may be exchanged between the CU and the DU and/or between the DU and the RU. For example, the non-real-time RIC delivers the processing result to the DU, and the DU sends the processing result to the RU.

The near-real-time RIC and the non-real-time RIC each may alternatively be independently deployed as a network element. Optionally, the near-real-time RIC and the non-real-time RIC may alternatively serve as a part of another device. For example, the near-real-time RIC is deployed on the access network device (for example, the CU or the DU), and the non-real-time RIC is deployed on an OAM, a cloud server, a core network device, or another network device.

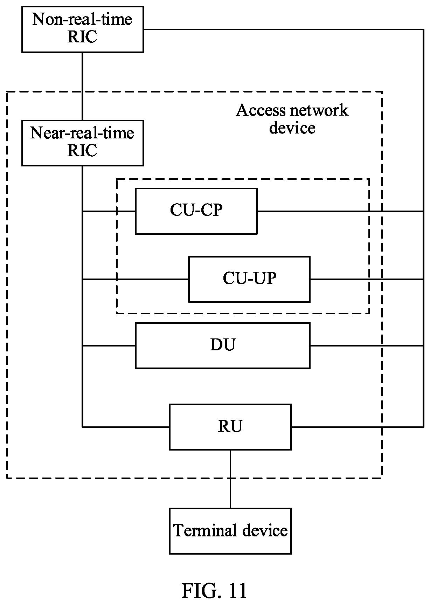

FIG. 11 is a diagram of a structure of still another communication system to which an embodiment of this application is applicable. Compared with FIG. 10, in FIG. 11, a CU is separated into a CU-CP and a CU-UP.

The following describes the method provided in this embodiment of this application with reference to the accompanying drawings. In the accompanying drawings corresponding to embodiments of this application, all steps represented by dashed lines are optional steps. The terminal device in embodiments of this application may be the terminal device in any one of FIG. 1 and FIG. 7 to FIG. 11, and the network device is, for example, the network device in FIG. 1, or the access network device and/or the core network device in any one of FIG. 7 to FIG. 11. If the technical solutions provided in embodiments of this application are applied to another communication system, a name and/or a function of the device may be changed. This is not limited herein.

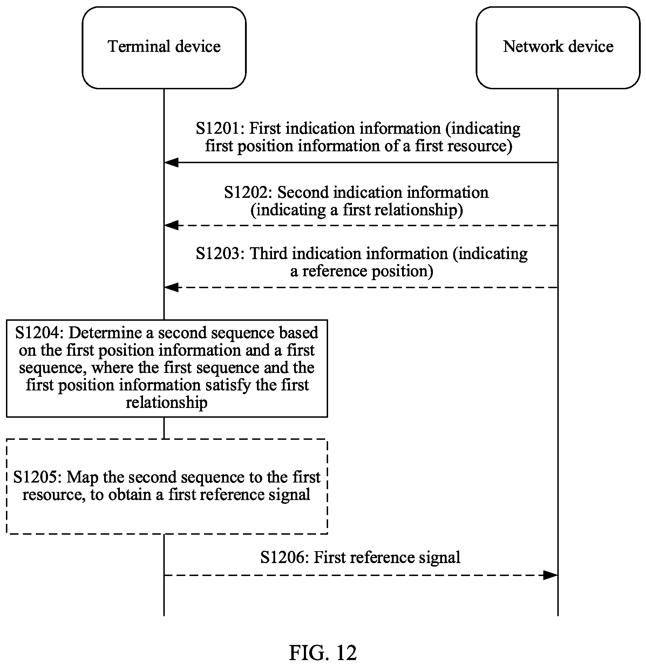

The communication method provided in embodiments of this application may be used to generate any type of reference signal sequence, for example, may be used to generate an uplink reference signal, or may be used to generate a downlink reference signal. The following describes a communication method provided in an embodiment of this application with reference to a diagram of a communication method shown in FIG. 12. FIG. 12 describes a process of generating an uplink reference signal.

S1201: A network device sends first indication information to a terminal device. Correspondingly, the terminal device receives the first indication information from the network device.

For example, the first indication information may be carried in any signaling (for example, higher layer signaling, dedicated signaling, or physical layer signaling). This is not limited herein. Any signaling is, for example, RRC signaling, downlink control information (downlink control information, DCI) signaling, or MAC control element (control element, CE) signaling. The first indication information indicates/includes first position information of a first resource.

For meaning of the first resource, refer to the content of the first resource described above. Repeated content is not listed again. The first resource may include M resources, M is a positive integer, and the first resource may include only the M resources, or the M resources may be a part or all of the first resource. Optionally, the M resources may correspond to a same time domain resource, and may correspond to different frequency domain resources. Optionally, sizes of frequency domain resources included in any two of the M resources may be the same. For example, the first resource includes a resource 1 and a resource 2, the resource 1 is a subcarrier n on a symbol 1, and the resource 2 is a subcarrier n+2 on the symbol 1. In other words, sizes of frequency domain resources included in the resource 1 and the resource 2 are both one subcarrier, and the resource 1 and the resource 2 both correspond to a same time domain resource, that is, one symbol. When a value of M is greater than 1, the first resource may be considered as one resource subset, one resource group, or the like.

One of the M resources may be one resource element, or may include U resource elements, where U is a positive number. A size of each resource is not specifically limited in embodiments of this application. Alternatively, when the first resource includes a time domain resource and a frequency domain resource, one of the M resources may include U1 time domain units and U2 frequency domain units. This is not limited herein. Both U1 and U2 are positive numbers, and U1 and U2 may be the same or different.

The first resource (or the M resources) may be uniformly or non-uniformly arranged. The non-uniform arrangement is, for example, non-uniform distribution (or arrangement) in frequency domain.

The non-uniform distribution in frequency domain may also be understood as that densities of the M resources included in the first resource are different in frequency domain, or may be understood as that a frequency domain spacing of one adjacent resource pair in the M resources is different from a frequency domain spacing of another adjacent resource pair in the M resources. The adjacent resource pair includes two adjacent resources in the M resources. Two resources included in one adjacent resource pair and two resources included in another adjacent resource pair are not completely the same, that is, the two resources included in the adjacent resource pair and the two resources included in the another adjacent resource pair may be partially the same or may be completely different. For example, the two resources included in the adjacent resource pair are a resource 1 and a resource 2, and the two resources included in the another adjacent resource pair are the resource 2 and a resource 3. For another example, the two resources included in the adjacent resource pair are a resource 2 and a resource 3, and the two resources included in the another adjacent resource pair are a resource 4 and a resource 5.

The first position information may also be referred to as a reference signal resource pattern, or indicates a reference signal resource pattern. The first position information may indicate positions of the M resources, that is, M positions. The first position information includes, for example, relative position information of the M resources and/or absolute position information of the M resources.

The absolute position information of the M resources indicates absolute positions of the M resources, and the absolute positions of the M resources are, for example, positions of the M resources relative to a first resource set. In addition to the first resource, the first resource set further includes some other resources. The first resource set includes, for example, a resource allocated by the network device to the terminal device, a resource used by the terminal device to send an uplink signal, or a resource available to the terminal device. This is not specifically limited herein. The absolute position information of the M resources may indicate/include M absolute indexes of the M resources. The M absolute indexes are indexes of the M resources relative to the first resource set. In other words, the M absolute indexes may indicate positions of the M resources in the first resource set, or may be described as being used to determine the M resources in the first resource set. The index in embodiments of this application may also be referred to as a number/identifier or the like. This is not specifically limited herein.

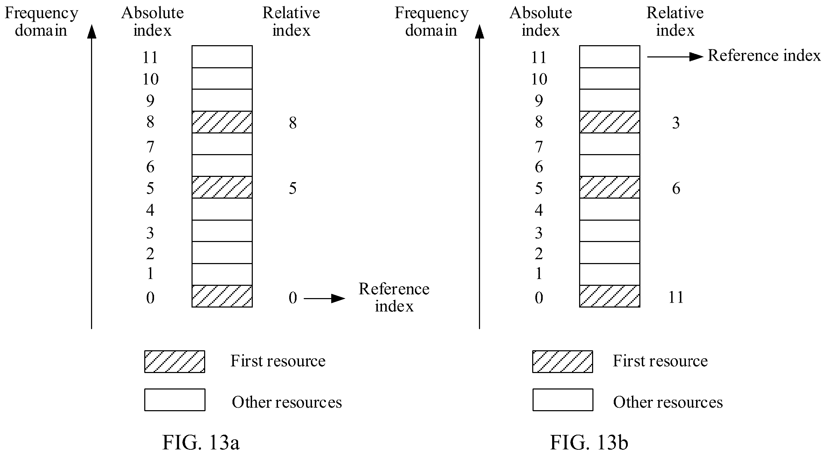

For example, FIG. 13a and FIG. 13b are diagrams of first resources according to an embodiment of this application. As shown in FIG. 13a and FIG. 13b, a first resource set includes 12 resources shown as a resource 0 to a resource 11. M resources included in the first resource are three resources: a resource 0, a resource 5, and a resource 8, where 0, 5, and 8 may be considered as examples of M absolute indexes.

Relative position information of the M resources indicates relative positions of the M resources, and the relative positions of the M resources are, for example, positions of the M resources relative to a reference position. The reference position and the relative position information of the M resources included in the first resource are used to determine absolute position information of the M resources included in the first resource. A first resource subset is a part of resources in the first resource set, and includes the first resource. For example, the first resource subset is the first resource. The relative position information of the M resources may indicate/include M relative indexes of the M resources. The M relative indexes indicate indexes of absolute indexes (which may be referred to as reference indexes) of the M resources relative to the reference position. In other words, the M relative indexes may indicate positions of the M resources in the first resource subset, or may be described as being used to determine the M resources in the first resource subset.

For example, refer to the diagram of the first resources shown in FIG. 13a and FIG. 13b. As shown in FIG. 13a, the reference index is 0, and the first resource subset includes three resources: the resource 0, the resource 5, and the resource 8. A relative index corresponding to the resource 0 is 0, a relative index of the resource 5 is 5, and a relative index of the resource 8 is 8. Correspondingly, 0, 5, and 8 may be considered as examples of the M relative indexes.

Alternatively, as shown in FIG. 13b, if the reference index is 11, a relative index corresponding to the resource 0 is 11, a relative index of the resource 5 is 6, and a relative index of the resource 8 is 3. Correspondingly, 11, 6, and 3 may be considered as examples of the M relative indexes.

A manner in which the first indication information indicates the first position information may include direct indication and indirect indication. The following uses an example for description.

Direct indication: The first indication information includes the first position information. For example, the first indication information includes the absolute position information of the M resources or the relative position information of the M resources. In this way, difficulty in obtaining the first position information by the terminal device can be reduced.

Indirect indication: The first indication information includes a first parameter set (or referred to as a first key parameter or the like) used to determine the first position information. In other words, the first parameter set is used to generate the first position information (or the positions of the M resources, specifically the absolute positions or the M relative positions of the M resources). The first parameter set may include one or more parameters. In this way, the terminal device may determine the first position information based on the first parameter set. In this manner, an amount of data exchanged between the network device and the terminal device can be reduced, that is, signaling overheads are reduced.

If forms (or formats) of the first position information are different, manners in which the first indication information indirectly indicates the first position information may also be different. The following uses B1 or B2 as an example for description.

B1: The first position information (for example, the positions of M resources, the M absolute indexes, or the M relative indexes) may be represented by using a sequence. In this case, the first position information may also be replaced with the sequence (for example, referred to as a third sequence), and the first parameter set may be used to determine the third sequence. The third sequence includes M elements, and the M elements sequentially indicate the positions of the M resources (for example, the M relative indexes or the M absolute indexes).

For example, the first position information (or the third sequence) is represented by using a polynomial of degree D (or may be represented as d_{P}), and D is an integer greater than or equal to 1. In this case, the first indication information may indicate at least one of a part or all of coefficients of the polynomial of degree D, a highest degree of the polynomial of degree D, or a quantity of resource positions included in the first resource (for example, a quantity of elements included in the third sequence, or a length of the third sequence). In other words, the first parameter set may include at least one of a part or all of coefficients of the polynomial of degree D, a highest degree of the polynomial of degree D, or a quantity of resource positions included in the first resource. For example, a manner of representing the first position information is given by the following relationship (5): $P \left(n\right) = {p}_{{d}_{P}} {n}^{{d}_{P}} + … + {p}_{1} n + {p}_{0} , where 0 \leq n \leq {N}_{P} - 1$ (5)

P(n) represents the first position information or the third sequence, that is, the polynomial of degree D, d_{P} represents the highest degree of the polynomial of degree D, that is, *d_{P}∈*{1,2,3, ... }, *p*₀, *p*₁, ... , *p*_{*dp*-1}, *p_{d_{P}}* represents the coefficient of the polynomial of degree D, *p_{d_{P}}* is a real number greater than 0; *p*_{*dp*-1}, ..., and *p*₀ are all real numbers greater than or equal to 0, and N_{P} represents the quantity of resources included in the first resource (or may be described as a sequence length corresponding to P(n), or may be described as a quantity of pieces of position information included in the first position information), or may be considered as a length of the third sequence. When *d_{P}* = 1, it indicates that the N_{P} resources are uniformly distributed; or when *d_{P}* > 1, it indicates that the N_{P} resources are non-uniformly distributed. n may be considered as a number of P(n), or may be described as numbers of the M resources.

Optionally, a manner of representing the first position information may be preconfigured or predefined in the access network device and the terminal device, for example, a relationship shown in the foregoing relationship (5).

If content of the first indication information varies, a manner in which the terminal device determines the first position information also varies. The following provides examples for description with reference to content shown in C1 to C4.

C1: The first indication information indicates all of coefficients of the polynomial of degree D, a highest degree of the polynomial of degree D, and a quantity of resource positions included in the first resource.

In C1, the terminal device may directly determine the first position information, that is, determine the positions of the M resources, based on all of the coefficients of the polynomial of degree D, the highest degree of the polynomial of degree D, and the quantity of resource positions included in the first resource.

For example, Np is 3, d_{P} is 2, and *p*₂, *p*₁, and *p*₀ are sequentially 2, 2, and 1. In this case, P(n) =2n²+2*n*+1. Therefore, the M positions are sequentially 13, 5, and 1.

C2: The first indication information indicates a part of coefficients of the polynomial of degree D, a highest degree of the polynomial of degree D, and a quantity of resources included in the first resource. In C2, the first indication information indicates first S highest-degree coefficients in the polynomial of degree D, and last (d_{P} + 1 - S) low-degree coefficients that are not indicated are 0, so that all of the coefficients of the polynomial of degree D are obtained, and the first position information is determined with reference to the foregoing manner of C1.

Alternatively, in C2, the part of coefficients of the polynomial of degree D is indicated, and another piece of indication information indicates whether all of coefficients of the polynomial of degree D are sequentially indicated, where a polynomial coefficient that is not indicated is 0, so that all of the coefficients of the polynomial of degree D are obtained, and the first position information is determined with reference to the foregoing manner of C1.

Alternatively, in C2, the other part of coefficients that are not indicated in the polynomial of degree D may be preconfigured or predefined in the terminal device. The terminal device may obtain all of the coefficients of the polynomial of degree D based on the first indication information and the other part of coefficients that are preconfigured, and determine the first position information with reference to the foregoing manner of C1.

C3: The first indication information indicates all of coefficients of the polynomial of degree D and a quantity of resource positions included in the first resource.

In this case, a highest degree of the polynomial of degree D does not need to be indicated, and the highest degree may be determined based on a quantity of all of the coefficients.

C4: The first indication information indicates one or two items of a part or all of coefficients of the polynomial of degree D, a highest degree of the polynomial of degree D, or a quantity of resources included in the first resource.

In this case, one or two remaining items (that is, one or two items that are not indicated by the first indication information) of the part or all of the coefficients of the polynomial of degree D, the highest degree of the polynomial of degree D, or the quantity of resources included in the first resource may be preconfigured or predefined in the terminal device, for example, may be preconfigured or predefined in the terminal device in a protocol, or may be received by the terminal device from a device other than the access network device. This is not limited. In this way, the terminal device may determine the first position information with reference to the foregoing manner of C1 or C2.

For example, the first indication information indicates a quantity of resource positions included in the first resource. In this case, the highest degree of the polynomial of degree D and all of the coefficients of the polynomial of degree D may be preconfigured or predefined in the terminal device, for example, may be preconfigured or predefined in the terminal device in a protocol, or may be received by the terminal device from a device other than the access network device. This is not limited herein. In this way, the terminal device may determine the first position information with reference to the foregoing manner of C1 or C2.

For another example, the first indication information indicates a highest degree of the polynomial of degree D. In this case, the quantity of resource positions included in the first resource and all of the coefficients of the polynomial of degree D may be preconfigured or predefined in the terminal device, for example, may be preconfigured or predefined in the terminal device in a protocol, or may be received by the terminal device from a device other than the access network device. This is not limited herein. In this way, the terminal device may determine the first position information with reference to the foregoing manner of C1 or C2.

There may be a plurality of types of first indication information. The foregoing C1 to C4 are merely examples for describing the content of the first indication information, and the content of the first indication information is not listed one by one herein.

B2: If the first position information (or the positions of the M resources) has a plurality of values, the first parameter set may be used to determine the plurality of values.

For example, the first indication information may directly indicate the plurality of values. Alternatively, a row and/or a column in a first table indicate/indicates a possible value of the position information, and the first parameter set may indicate at least one row and/or at least one column in the first table. The at least one row and/or the at least one column are/is used to determine the positions of the M resources. In this case, the first indication information may indicate an index/identifier of the at least one row and/or the at least one column, and the like.

The first table may be preconfigured or predefined in the terminal device and the network device, or may be configured by the network device for the terminal device. This is not specifically limited herein. After receiving the first indication information, the terminal device may determine the first position information based on the first table and the index of the at least one row and/or the at least one column, and therefore may determine the M positions.

For example, Table 1 shows an example of the first table provided in this embodiment of this application.

**Table 1**

| Index | First position information |
|---|---|
| 0 | {1, 4, 8, 10} |
| 1 | {2, 7, 9, 11} |

As shown in Table 1, the first indication information indicates that the index is 1. In this case, the terminal device may determine, based on the first indication information and Table 1, that the first position information (or the M relative indexes or the M absolute indexes) is 2, 7, 9, or 11.

It should be understood that B1 or B2 is an example of a possible form of the first position information. Actually, there may be a plurality of forms of the first position information. For example, the first position information may alternatively be in another form, for example, a function relationship. This is not specifically limited herein.

After the terminal device determines the first position information, it is equivalent to that the positions of the M resources are determined, and that the first resource is determined.

S1202: The network device sends second indication information to the terminal device. Correspondingly, the terminal device receives the second indication information from the network device.

For a manner in which the network device sends the second indication information to the terminal device, refer to the foregoing content in which the network device sends the first indication information to the terminal device. Repeated content is not listed again. Optionally, the first indication information and the second indication information may be carried in same signaling. In this way, sending the signaling by the network device to the terminal device is equivalent to sending the first indication information and the second indication information to the terminal device.

The second indication information may indicate a first relationship, or the second indication information is used to determine a first relationship. The first relationship may be a mapping relationship, for example, specifically a function relationship or a correspondence, or the first relationship is represented in a form of a table. A specific form of the first relationship is not limited in embodiments of this application. The first relationship is a relationship that the first position information and the first sequence satisfy. In other words, the first position information and the first sequence satisfy the first relationship. The first relationship may specifically include the following D1 or D2, which is separately described below.

D1: The first relationship may specifically include a relationship between the first position information and the first sequence. In this case, for the first relationship, refer to the following relationship (6): $B \left(n\right) = {e}_{1} \left(P\left(n\right)\right)$ (6)

e₁ may represent an example of the first relationship, *B*(*n*) represents an example of the first sequence, and *P(n)* represents an example of the first position information.

Optionally, a manner of representing the first relationship may be preconfigured or predefined in the access network device and the terminal device, for example, a relationship like the relationship (6).

D2: The first relationship may specifically include a relationship between the first parameter set and a second parameter set. Because the first parameter set is used to determine the first position information, and the second parameter set is used to determine the first sequence, the first relationship is equivalent to indicating a relationship between the first position information and the first sequence. In this case, for the first relationship, refer to the following relationship (7): ${ParameterSet}_{B} = g \left({ParameterSet}_{P}\right)$ (7)

*g* may represent an example of the first relationship, *ParameterSet_{P}* represents an example of the first parameter set, and *ParameterSet_{B}* represents an example of the second parameter set.

Optionally, a manner of representing the first relationship may be preconfigured or predefined in the access network device and the terminal device, for example, a relationship like the relationship (7).

In a possible implementation, a sequence length of the first sequence may be determined based on the first position information. When the sequence length of the first sequence is determined based on the first position information, and a phase of the first sequence is represented by using a polynomial of degree H, for the relationship between the first sequence and the first position information, specifically refer to content shown in the following relationship (8) to relationship (10). ${d}_{B} = {g}_{1} \left({d}_{P}\right)$ (8) ${φ}_{s} = {g}_{2} \left({p}_{0},{p}_{1},…,{p}_{{d}_{P} - 1},{p}_{{d}_{P}}\right) , s ϵ \left\{0,1,…,{d}_{B}\right\}$ (9) ${N}_{B} = {g}_{3} \left({N}_{P}\right)$ (10)

*d_{B}* is a highest degree of a *φ*(*n*) polynomial (the polynomial of degree H or a polynomial corresponding to the phase of the first sequence), *d_{B}∈*{1,2,3, ... }, *φₛ* is an s^{th} degree coefficient in the *φ*(*n*) polynomial, s∈{0,1,2, ..., *d_{B}*}*, d_{P}* is a highest degree of the *P(n)* polynomial, *pᵢ* is an i^{th} degree coefficient in the *P(n)* polynomial, i∈{0,1,2, ... , *d_{P}*}, *N_{P},* d_{P}, and *p*₀, *p*₁, ... , *pd_{_{P}}-*1*, p_{d_{P}}* are explained by referring to explanations of *N_{P}* , d_{P} , and *p*₀, *p*₁, ... , *p*_{*dp*-1}, *p_{d_{P}}* corresponding to the foregoing relationship (5), and are not enumerated herein again. *N_{B}* represents a length of the first sequence, or may be described as a quantity of elements included in the first sequence, and N_{B} is a positive integer. N_{B}∈{1,2,3,...}. *g*₁ may be considered as a first sub-relationship in the first relationship, *g*₂ may be considered as a second sub-relationship in the first relationship, and *g*₃ may be considered as a third sub-relationship in the first relationship, that is, the first relationship may include *g*₁, *g*₂, and *g*₃.

It should be understood that the relationship (6), the relationship (7), and the relationship (8) to the relationship (10) are examples of the content of the first relationship. Actually, the first relationship may further have a plurality of forms. This is not specifically limited in embodiments of this application.

In a possible design, the first position information, the first sequence, and the second sequence in D1 or D2 may satisfy a second relationship. Optionally, D1 or D2 may be obtained by the network device and/or the terminal device through derivation based on the second relationship. The first sequence may be considered as a base sequence used to generate the second sequence. The second sequence is used to generate a first reference signal, and may be referred to as a reference signal sequence. In this case, for the second relationship, refer to the following relationship (11): $S \left(n\right) = f \left(B\left(n\right),P\left(n\right)\right)$ (11)

*f* may represent an example of the second relationship, *B*(*n*) represents an example of the first sequence, *P*(*n*) represents an example of the first position information, and *S(n)* represents an example of the second sequence. n may be understood as a number of P(n), or may be understood as a number of an element in the second sequence. A length of *S*(*n*) may be represented as Nₛ.

Optionally, a manner of representing the second relationship may be preconfigured or predefined in the network device and/or the terminal device, for example, a relationship like the relationship (11), so that the network device and/or the terminal device may determine the first relationship based on the second relationship. Alternatively, the terminal device determines the second relationship based on an indication of the network device.

In a possible implementation, the second indication information may include information about the second relationship, and the information about the second relationship indicates the first relationship. The terminal device may determine the second relationship based on the second indication information, and determine the first relationship based on the second relationship. This helps reduce an amount of exchange between the network device and the terminal device. Certainly, the second indication information may alternatively include information about the first relationship and the information about the second relationship. In this case, the terminal device may directly determine the first relationship and the second relationship based on the second indication information.

In this embodiment of this application, the first position information and the first sequence may satisfy the first relationship. The following describes a specific relationship between the first position information and the first sequence (or content specifically indicated by the first relationship).

E1: A phase of the first sequence is a quadratic polynomial of the first position information. Alternatively, it may be described as that the first relationship satisfies a criterion (for example, referred to as a criterion 1) in which a phase of the first sequence is a quadratic polynomial of the first position information. For ease of description, the quadratic polynomial of the first position information herein is represented as (or referred to as) a quadratic polynomial dxs1 below. In other words, the quadratic polynomial dxs1 below is an example of the quadratic polynomial of the first position information, that is, an example of the phase of the first sequence.

If a first resource is arranged in different manners, and first position information is represented in different manners, a first sequence is represented in different manners. Table 2 below is an example of the relationship between the first position information and the first sequence provided in this embodiment of this application.

**Table 2**

| First position information (for example, *P*(*n*)) | Phase of the first sequence (for example, *φ*(*n*)) |
|---|---|
| The first resource is uniformly distributed in frequency domain, and the first position information is represented by using a linear polynomial | The phase of the first sequence may be represented by using a quadratic polynomial |
| The first resource is non-uniformly distributed in frequency domain, and the first position information is represented by using a quadratic polynomial | The phase of the first sequence may be represented by using a quartic polynomial |
| The first resource is non-uniformly distributed in frequency domain, and the first position information is represented by using a cubic polynomial | The phase of the first sequence may be represented by using a sextic polynomial. |

For example, for a type of the first sequence, refer to the following relationship (12): $B \left(n\right) = {e}^{- j 2 πφ \left(n\right) / {M}_{B}} , where 0 \leq n \leq {N}_{B} - 1$ (12)

*B*(*n*) may represent an example of the first sequence, *φ*(*n*) may represent the phase of the first sequence, and M_{B} is a maximum prime number less than or equal to N_{B}. For an explanation of N_{B}, refer to content of N_{B} in the foregoing relationship (10). Details are not described herein again.

In a possible design, the phase of the first sequence may satisfy the following relationship (13): $φ \left(n\right) = {a}_{2} {P}^{2} \left(n\right) + {a}_{1} P \left(n\right)$ (13)

*a*₂ and *a*₁ are respectively a 2^{nd} degree coefficient and a 1^{st} degree coefficient of the quadratic polynomial dxs1, and *a*₂*P*²(*n*) + *a*₁*P*(*n*) may be represented as an example of the quadratic polynomial dxs1.

In another possible design, the phase of the first sequence may satisfy the following relationship (14): $φ \left(n\right) = {φ}_{{d}_{B}} {n}^{{d}_{B}} + {φ}_{{d}_{B} - 1} {n}^{{d}_{B} - 1} + ⋯ + {φ}_{1} n + {φ}_{0}$ (14)

The polynomial coefficient is *φ*₀, *φ*₁, ... , *φ*_{*dB*-1}*, φ_{dB},* where *φ_{d_{B}}∈*{1,2, ... , *M_{B} -* 1}, and *φ*₀, *φ*₁, ... , *φ*_{*dB*-1}*φ*{0,1,2, ..., *M_{B}* - 1}. For meaning of *d_{B},* refer to the content of *d_{B}* in the foregoing relationship (8). Details are not described herein again.

Optionally, a key parameter (that is, the second parameter set) of the phase of the first sequence and a key parameter (that is, the first parameter set) of the first position information satisfy the following relationship (15) to relationship (20). In this optional manner, the phase of the first sequence and the first position information may also satisfy a quadratic polynomial relationship. ${d}_{B} = 2 ∗ {d}_{p}$ (15) ${φ}_{s} = {a}_{2} ∗ {\sum }_{i = 0 , s - i ϵ \left[0, {d}_{p}\right] , s - i \neq i}^{i = {d}_{p}} {p}_{i} {p}_{s - i} \left({p}_{s / 2}^{2}{n}^{s}\right) , where s is an even number , {d}_{p} + 1 \leq s \leq 2 ∗ {d}_{p} - 1$ (16) ${φ}_{s} = {a}_{2} ∗ \left({p}_{s / 2}^{2}{n}^{s}+{\sum }_{i = 0 , s - i ϵ \left[0, {d}_{p}\right] , s - i \neq i}^{i = {d}_{p}} {p}_{i} {p}_{s - i}\right) , where s is an even number , {d}_{p} + 1 \leq s \leq 2 ∗ {d}_{p} - 1$ (17) ${φ}_{s} = {a}_{1} {p}_{s} {n}^{s} + {a}_{2} {\sum }_{i = 0 , s - i ϵ \left[0, {d}_{p}\right] , s - i \neq i}^{i = {d}_{p}} {p}_{i} {p}_{s - i} , where s in an odd number , 1 \leq s \leq {d}_{p}$ (18) ${φ}_{s} = {a}_{1} {p}_{s} {n}^{s} + {a}_{2} {p}_{s / 2}^{2} {n}^{s} + {a}_{2} {\sum }_{i = 0 , s - i ϵ \left[0, {d}_{p}\right] , s - i \neq i}^{i = {d}_{p}} {p}_{i} {p}_{s - i} , where s is an even number , 1 \leq s \leq {d}_{p}$ (19) ${φ}_{0} = {a}_{1} {p}_{o} + {a}_{2} {p}_{o}^{2}$ (20)

*d_{B}* is a highest degree of a *φ*(*n*) polynomial, *φₛ* is an s^{th} degree coefficient in the *φ*(*n*) polynomial, s∈{0,1,2, ..., *d_{B}*}, *d_{P}* is a highest degree of the *P(n)* polynomial, *pᵢ* is an i^{th} degree coefficient in the *P(n)* polynomial, and i∈{0,1,2, ... , *d_{P}*}. For explanations of *a*₂ and *a*₁ in the relationship (20), respectively refer to the content of *a*₂ and *a*₁ in the foregoing relationship (13). Details are not described herein again.

E2: A change rate of a phase of the first sequence with respect to the first position information is a linear polynomial of the first position information. Alternatively, it may be described as that the first relationship satisfies a criterion (for example, referred to as a criterion 2) in which a change rate of a phase of the first sequence with respect to the first position information is a linear polynomial of the first position information. In other words, the change rate of the phase of the first sequence with respect to the first position information is a ratio of a phase change amount of the first sequence to a first position change amount corresponding to an element included in the first sequence. For example, in E2, the phase of the first sequence and the first position information may satisfy content shown in the following relationship (21): $\frac{Δφ \left(n\right)}{Δp \left(n\right)} = 2 {a}_{2} p \left(n\right) + {a}_{2} Δp \left(n\right) + {a}_{1}$ (21)

Δφ(n) represents the phase change amount of the first sequence, and Δφ(n) = φ(n + 1) - φ(n). Δp(n) represents the first position change amount corresponding to the element included in the first sequence, and Δp(n) = p(n + 1) - p(n). For explanations of *a*₂ and *a*₁ in the relationship (20), refer to the content of *a*₂ and *a*₁ in the foregoing relationship (13). Details are not described herein again.

In the foregoing relationship (20), the second parameter set may include *d_{B}, d_{B},* and *φ*₀, *φ*₁, ... , *φ*_{*d_{B}*-1}*, φ_{d_{B}},* and the second parameter set may be represented by using the first parameter set. For a relationship of the second parameter set, refer to the content shown in the following relationship (14) to relationship (19). Details are not described herein again.

In a possible implementation, the second indication information may indicate at least one of a part or all of coefficients of the quadratic polynomial dxs1, a root index of the second sequence, or at least one first parameter. The root index of the second sequence and the at least one first parameter are used to determine the part or all of the coefficients of the quadratic polynomial, or may be understood as a manner in which the root index of the second sequence and the at least one first parameter belong to a manner indicating the part or all of the coefficients of the quadratic polynomial dxs1. The root index of the second sequence may also be considered as a root index of the first reference signal.

The following describes possible content of the second indication information by using examples with reference to F1 to F5.

F1: The second indication information may indicate only a part or all of coefficients of the quadratic polynomial dxs1. When the second indication information indicates only the part of coefficients of the quadratic polynomial dxs1, the other part of coefficients of the quadratic polynomial dxs1 may be preconfigured or predefined in the terminal device. In this way, the terminal device may determine the first sequence and/or the second parameter set based on the first position information and all of the coefficients of the quadratic polynomial dxs1. Alternatively, the terminal device may ignore the other part of coefficients of the quadratic polynomial dxs1. In this way, the terminal device may determine the first sequence and/or the second parameter set based on the first position information and the part of coefficients of the quadratic polynomial dxs1.

For example, the terminal device can determine the first position information based on the first indication information, and may further input the first position information into the quadratic polynomial dxs1, to determine a phase of the first sequence, and further determine the first sequence. Certainly, the terminal device may alternatively determine the second parameter set based on the first position information and the quadratic polynomial dxs1.

For example, the part or all of the coefficients of the quadratic polynomial dxs1 are, for example, a1 and/or a2 in the foregoing relationship (13) or (20).

F2: The second indication information indicates a root index of the second sequence and at least one first parameter.

In this way, the terminal device may determine all of coefficients of the quadratic polynomial dxs1 based on the root index of the second sequence and the at least one first parameter, and determine the first sequence and/or the second parameter set based on all of the coefficients of the quadratic polynomial dxs1 and the first position information.

For example, the root index of the second sequence may be represented as q, and the at least one first parameter is, for example, b and/or k, where b is an integer greater than or equal to 0, and k is an integer greater than 0. *a*₂ = *q* _{*}k and *a*₁ = *q* _{*}b.

F3: The second indication information indicates a root index of the second sequence.

In F3, at least one first parameter may be preconfigured or predefined in the terminal device. In this way, the terminal device may determine the first sequence and/or determine the second parameter set with reference to the content described in F2 above. Repeated content is not listed again.

F4: The second indication information indicates at least one parameter.

In F4, a root index of the second sequence may be preconfigured or predefined in the terminal device. In this way, the terminal device may determine the first sequence and/or determine the second parameter set with reference to the content described in F2 above. Repeated content is not listed again.

F5: The second indication information indicates a part or all of coefficients of the quadratic polynomial dxs1, a root index of the second sequence, and at least one first parameter.

In this case, the terminal device may directly determine the first sequence and/or determine the second parameter set with reference to the content described in F1 above. Repeated content is not listed again.

It should be noted that S1201 and S1202 may be performed in any sequence. For example, S1201 is performed before S1202; or S1202 is performed before S1201; or S1201 and S1202 are performed simultaneously. This is not specifically limited herein.

In a possible implementation, the first sequence, the second parameter set, and/or the like may be preconfigured in the terminal device. In this case, the first relationship does not need to be indicated, that is, step S1202 does not need to be performed. In other words, S1202 is an optional step, and is shown by using a dashed line in FIG. 12.

S1203: The network device sends third indication information to the terminal device. Correspondingly, the terminal device receives the third indication information from the network device.

For a manner in which the network device sends the third indication information to the terminal device, refer to the foregoing content in which the network device sends the first indication information to the terminal device. Repeated content is not listed again. Optionally, the third indication information and the first indication information may be carried in same signaling. In this way, sending the signaling by the network device to the terminal device is equivalent to sending the first indication information and the third indication information to the terminal device. Alternatively, the third indication information and the first indication information may be carried in same signaling. In this way, sending the signaling by the network device to the terminal device is equivalent to sending the second indication information and the third indication information to the terminal device. Alternatively, the third indication information, the second indication information, and the first indication information may be carried in same signaling. In this way, sending the signaling by the network device to the terminal device is equivalent to sending the first indication information, the second indication information, and the third indication information to the terminal device.

The third indication information may indicate a reference position. For example, the third indication information indicates an absolute index (referred to as a reference index for short below) of the reference position, and the reference index may be represented by, for example, *p*₀. For example, the reference position may be represented by using the reference index. In this case, the reference index and relative indexes of the M resources are jointly used to determine absolute indexes of the M resources. The reference index may be an absolute index of a start position of the first resource, or an absolute index of an end position of the first resource, or the reference index may be less than an absolute index of a start position of the first resource, or the reference index may be greater than an absolute index of an end position of the first resource. A specific value of the reference index is not limited in embodiments of this application.

For example, if the value of the reference index is less than or equal to the value of the absolute index of the start position (or a start resource) of the first resource, a value of an i^{th} absolute index in the M absolute indexes may be equal to a sum of the value of the reference index and a value of an i^{th} relative index in the M relative indexes, where i is an integer greater than or equal to 0. Alternatively, if the value of the reference index is greater than or equal to the value of the absolute index of the end position (or an end resource) of the first resource, a value of an i^{th} absolute index in the M absolute indexes may be equal to a difference between the value of the reference index and a value of an i^{th} relative index in the M relative indexes.

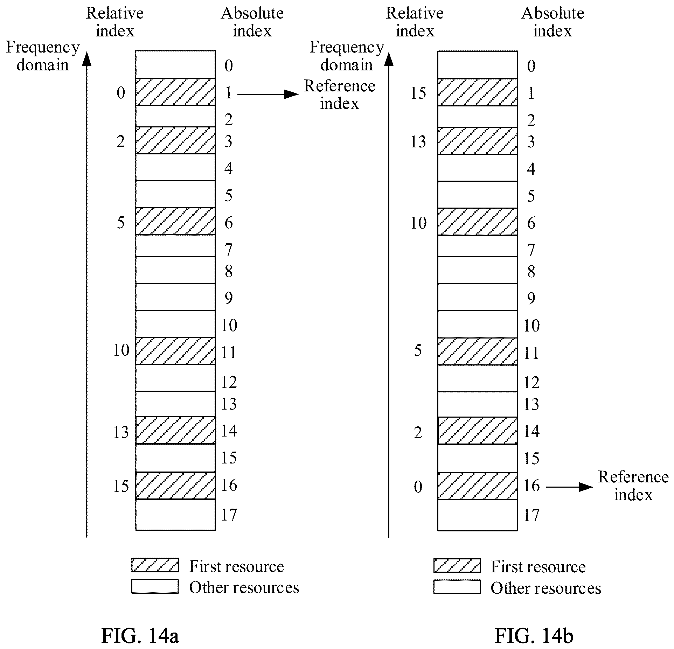

For example, FIG. 14a and FIG. 14b are diagrams of a relationship between a reference index, M absolute indexes, and M relative indexes according to an embodiment of this application. In FIG. 14a and FIG. 14b, an example in which an absolute index starts from 0 and absolute indexes of a first resource include {1, 3, 6, 11, 14, 16} is used.

In FIG. 14a, an example in which the reference index is equal to an absolute index of a start position of the first resource is used. As shown in FIG. 14a, values of the M relative indexes are {0, 2, 5, 10, 13, 15}. When a value of the reference index is 1, values {1, 3, 6, 11, 14, 16} of the M absolute indexes may be determined based on {0, 2, 5, 10, 13, 15}.

In FIG. 14b, an example in which the reference index is an absolute index of an end position of the first resource is used. As shown in FIG. 14b, values of the M relative indexes are {15, 13, 10, 5, 2, 0}. When a value of the reference index is 16, values {1, 3, 6, 11, 14, 16} of the M absolute indexes may be determined based on the values {15, 13, 10, 5, 2, 0} of the M relative indexes.

It should be noted that S1201 and S1203 may be performed in any sequence. For example, S1201 is performed before S1203; or S1203 is performed before S1201; or S1201 and S1203 are performed simultaneously. This is not specifically limited herein. Certainly, S1203 and S1202 may be performed in any sequence.

In a possible implementation, the reference position and the like may be preconfigured in the terminal device. In this case, the reference position does not need to be indicated, that is, step S1203 does not need to be performed. In other words, S1203 is an optional step, and is shown by using a dashed line in FIG. 12.

S1204: The terminal device determines the second sequence based on the first position information and the first sequence, where the first sequence and the first position information satisfy the first relationship.

If specific content of the first relationship varies, a specific manner in which the terminal device determines the second sequence varies. The following separately describes the manners.

G1: If the first relationship is the relationship shown in D1, the terminal device determines the first sequence based on the first position information and the first relationship. Further, the second sequence may be determined based on the first sequence.

In a possible implementation, the terminal device determines the first sequence based on the first position information and the first relationship, and determines the second sequence based on the first sequence, the first position information, and the second relationship.

In another possible implementation, the terminal device determines the first sequence based on the first position information and the first relationship, and determines the second sequence based on the first sequence and a third relationship. The third relationship indicates a relationship between the first sequence, the second parameter set, and the second sequence. For a manner of determining the second sequence, refer to content shown in the following relationship (22). $S \left(n\right) = {B}^{\left({ParameterSet}_{B}\right)} \left(n\right)$ (22)

In this case, the second sequence is equivalent to being determined based on the first sequence and the second parameter set. Alternatively, it may be described as that the second sequence is associated with the first sequence and the first position information. Alternatively, it may be described as that the second sequence is associated with the first sequence and the first parameter set. Alternatively, it may be described as that the second sequence is associated with the first sequence and the second parameter set.

The third relationship may be preconfigured or predefined in the terminal device, or may be determined by the terminal device based on the second relationship. The second parameter set may be preconfigured or predefined in the terminal device, or may be determined by the terminal device based on the first position information, or may be determined by the terminal device based on the first parameter set. For example, the terminal device may determine the second parameter set based on the first parameter set with reference to the foregoing relationship (7). This is not specifically limited herein.

G2: If the first relationship is the relationship shown in D2, the terminal device may determine the second sequence based on the second parameter set and the first sequence.

For example, the terminal device may determine the second parameter set based on the first parameter set and the first relationship. The terminal device may further determine the first sequence based on the second parameter set, and determine the second sequence based on the first sequence and the second parameter set. In this case, for determining the relationship of the second sequence, refer to the content of the relationship (22). Alternatively, the terminal device may determine the first sequence based on the second parameter set, and then determine the second sequence based on the first sequence, the first position information, and the second relationship.

S1205: The terminal device maps the second sequence to the first resource, to obtain the first reference signal.

The terminal device may map the second sequence to the first resource, to send the first reference signal to the network device. It may be understood that M elements included in the second sequence may be one-to-one mapped to the M resources included in the first resource. For ease of description, the second sequence is represented by using S(n), and the first position information (or the M absolute indexes or the M relative indexes of the M resources) is represented by using *P(n)* in the following.

In a possible implementation, a k^{th} element in the second sequence S(n) may be directly mapped to a k^{th} resource in the M resources in sequence, where k is a natural number, that is, sorting does not need to be performed on the second sequence and the M resources. That the M elements included in the second sequence *S(n)* one-to-one correspond to the M indexes may also be understood as that the M elements included in the second sequence *S*(*n*) one-to-one correspond to the M resources included in the first position information *P(n).* For example, an element numbered i in the second sequence is mapped to a resource numbered i in the first position information *P(n),* where i is a positive integer. When indexes of the M resources are relative indexes or absolute indexes, specific representations of mapping the second sequence *S*(*n*) may be different. The following provides descriptions in different cases.

Y1: The indexes of the M resources are the relative indexes (that is, the M relative indexes) of the M resources, and the first position information (or the M relative indexes) is represented by using P(n). In this case, the second sequence *S*(*n*) and the first position information *P(n)* may satisfy content of the following relationship (23). $A \left({p}_{0}+c\times P\left(n\right)\right) = \left\{\begin{matrix}scalingfactor \left(n\right) \times S \left(n\right) & 0 \leq n \leq {N}_{S} - 1 \\ 0 & otherwise\end{matrix}\right.$ (23)

The foregoing formula (23) may indicate that the reference signal sequence S(n) is mapped to *p*₀ + c×P(n) through amplitude and phase scaling scalingfactor(n).

A (*p*₀ *+ c×P*(*n*)) indicates a reference signal sequence corresponding to a second resource (that is, including the first resource and the another resource), and *p*₀ *+ c×P*(*n*) represents a resource (for example, the first resource) used to map the reference signal, and *otherwise* represents a resource (for example, another resource) other than the resource used to map the reference signal. $c = \left\{\begin{matrix}1 & {p}_{0} \leq {p}_{start} \\ - 1 & {p}_{0} \geq {p}_{end}\end{matrix}\right.$, where *p*₀ is an absolute index of the reference position (that is, a reference index), *pₛₜₐᵣₜ* is an absolute index of a position of a start resource of the first resource, *p_{end}* is an absolute index of a position of an end resource of the first resource, and *scalingfactor*(*n*) is an amplitude and phase scaling factor sequence, including one or more of the following: an amplitude scaling factor *amp*(*n*)*,* a cyclic shift factor *cs*(*n*), or a code division multiplexing factor *cdm*(*n*). *P*(*n*) represents indexes of M reference signal resource relative positions, and *p*₀ *+ c×P*(*n*) represents indexes of reference signal resource absolute positions corresponding to the M indexes. *N_{S}* indicates a length of S(n).

*A*(*p*₀ *+ c×P*(*n*)) or *S(n)* may be at a port level. *S*(*n*) may alternatively be at a port group level. It may be understood that the port group is a set including a plurality of antenna ports.

In a possible design, a plurality of digital ports of the network device may be grouped to form a plurality of port groups.

In a possible design, one first resource has a plurality of ports (or digital ports), and corresponds to one port group (or digital port group). A plurality of first resources respectively correspond to a plurality of port groups.

In a possible design, a plurality of first resources correspond to one port group. In another possible design, the port group includes antenna ports corresponding to antennas connected to a plurality of digital ports. The plurality of digital ports may be a plurality of digital ports corresponding to a same analog beam, and one port group corresponds to one analog beam. Alternatively, the plurality of digital ports may be digital ports corresponding to a plurality of analog beams, and one port group corresponds to a plurality of analog beams. A plurality of digital ports corresponding to a same analog beam are divided into a plurality of subsets, each subset corresponds to one port group, one port group corresponds to one analog beam, and the port group includes an antenna port corresponding to an antenna connected to a digital port in the subset. Optionally, the port group may alternatively be described as a digital-analog port group.

Y2: The indexes of the M resources are the absolute indexes (that is, the M absolute indexes) of the M resources, and the first position information (or the M absolute indexes) is represented by using P(n). In this case, the second sequence *S*(*n*) and the first position information *P(n)* may satisfy content of the following relationship (24). $A \left(P\left(n\right)\right) = \left\{\begin{matrix}scalingfactor \left(n\right) \times S \left(n\right) & 0 \leq n \leq {N}_{S} - 1 \\ 0 & otherwise\end{matrix}\right.$ (24)

The foregoing formula (24) may indicate that the reference signal sequence S(n) is mapped to *P*(*n*) through amplitude and phase scaling scalingfactor(n).

*scalingfactor*(*n*) is an amplitude and phase scaling factor sequence, including one or more of the following: an amplitude scaling factor *amp*(*n*), a cyclic shift factor *cs*(*n*), or a code division multiplexing factor *cdm*(*n*). *A*(*P*(*n*)) represents a reference signal sequence corresponding to the second resource (including the first resource and another resource) when the absolute indexes of the M resources are *P(n),* and *otherwise* represents a resource (for example, the another resource) other than a resource used to map a reference signal.

*A*(*P*(*n*)) or *S*(*n*) may be at a port level. *S*(*n*) may alternatively be at a port group level.

In another possible implementation, the terminal device may sort the M elements in the second sequence and the M resources in the first resource, and sequentially map the sorted M elements (that is, an example of the sorted second sequence) to the sorted M resources (that is, an example of the sorted first resource). The M sorted elements (or the sorted second sequence) are represented as ${S \left(n\right)}^{˜}$, and the M sorted resources (or the sorted first resource) may be represented as ${P \left(n\right)}^{˜}$*.*

For example, the terminal device may map a k^{th} element in the M elements (which may be referred to as the sorted M elements for short) included in the sorted second sequence to a k^{th} resource in the sorted first resource. k is an integer greater than or equal to 0, that is, a natural number. The sorted M elements may be obtained by sorting the M elements based on numbers of the M elements. The sorted M resources may be obtained by sorting the M resources based on the indexes of the M resources, or the M resources may be obtained by sorting the M resources based on numbers of the M resources. A sequence of sorting the M resources and a sequence of sorting the M elements may be the same or different, which are separately listed below.

H1: The sequence of sorting the M resources is the same as the sequence of sorting the M elements.

H1-1: A sequence of sorting the indexes of the M resources is the same as a sequence of sorting the numbers of the M elements.

H1-1-1: The indexes of the M resources are sorted in ascending order, and the numbers of the M elements are sorted in ascending order.

For example, M=6, numbers (that is, n) of the M resources or the M elements are {1, 2, 3, 4, 5, 6}, indexes (that is, P(n)) of the M resources are {1, 3, 6, 11, 14, 16}, and M elements (that is, S(n)) of the second sequence are {S(1), S(2), S(3), S(4), S(5), S(6)}.

For example, the sorted M resources may be obtained by sorting the M resources in ascending order based on the indexes. For example, indexes corresponding to the obtained sorted M resources are {1, 3, 6, 11, 14, 16}. For example, the sorted M elements may be obtained by sorting the M elements in ascending order based on the numbers. For example, the obtained sorted M elements are {S(1), S(2), S(3), S(4), S(5), S(6)}.

Therefore, the terminal device may map a k^{th} element in the sorted M elements to a k^{th} element in the sorted M resources, for example, k=1. To be specific, the terminal device maps a 1^{st} element in the sorted M elements to a 1^{st} element in the sorted M resources, that is, maps S(1) to a resource whose index is 1. For another example, k=2, that is, the terminal device maps a 2^{nd} element in the sorted M elements to a 2^{nd} element in the sorted M resources, that is, maps S(2) to a resource whose index is 3, and so on.

H1-1-2: The indexes of the M resources are sorted in descending order, and the numbers of the M elements are sorted in descending order.

For example, M=6, numbers (that is, n) of the M resources are {1, 2, 3, 4, 5, 6}, indexes (that is, P(n)) of the M resources are {1, 3, 6, 11, 14, 16}, and M elements (that is, S(n)) of the second sequence are {S(1), S(2), S(3), S(4), S(5), S(6)}.

For example, the sorted M resources may be obtained by sorting the M resources in descending order based on the indexes. For example, indexes corresponding to the obtained sorted M resources are {16, 14, 11, 6, 3, 1}. For example, the sorted M elements may be obtained by sorting the M elements in descending order based on the numbers. For example, the obtained sorted M elements are {S(6), S(5), S(4), S(3), S(2), S(1)}.

Therefore, the terminal device may map a k^{th} element in the sorted M elements to a k^{th} element in the sorted M resources, for example, k=1. To be specific, the terminal device maps a 1^{st} element in the sorted M elements to a 1^{st} element in the sorted M resources, that is, maps S(6) to a resource whose index is 16. For another example, k=2, that is, the terminal device maps a 2^{nd} element in the sorted M elements to a 2^{nd} element in the sorted M resources, that is, maps S(5) to a resource whose index is 14, and so on.

H1-2: A sequence of sorting the numbers of the M resources is the same as a sequence of sorting the numbers of the M elements.

H1-2-1: The numbers of the M resources are sorted in ascending order, and the numbers of the M elements are sorted in ascending order.

For example, M=6, numbers (that is, n) of the M resources are {1, 2, 3, 4, 5, 6}, indexes (that is, P(n)) of the M resources are {1, 3, 6, 11, 14, 16}, and M elements (that is, S(n)) of the second sequence are {S(1), S(2), S(3), S(4), S(5), S(6)}.

For example, the sorted M resources may be obtained by sorting the M resources in ascending order based on the numbers. For example, numbers corresponding to the obtained sorted M resources are {1, 2, 3, 4, 5, 6}. For example, the sorted M elements may be obtained by sorting the M elements in ascending order based on the numbers. For example, the obtained sorted M elements are {S(1), S(2), S(3), S(4), S(5), S(6)}.

Therefore, the terminal device may map a k^{th} element in the sorted M elements to a k^{th} element in the sorted M resources, for example, k=1. To be specific, the terminal device maps a 1^{st} element in the sorted M elements to a 1^{st} element in the sorted M resources, that is, maps S(1) to a resource whose number is 1. For another example, k=2, that is, the terminal device maps a 2^{nd} element in the sorted M elements to a 2^{nd} element in the sorted M resources, that is, maps S(2) to a resource whose number is 2, and so on.

H1-2-2: The numbers of the M resources are sorted in descending order, and the numbers of the M elements are sorted in descending order.

For example, M=6, numbers (that is, n) of the M resources are {1, 2, 3, 4, 5, 6}, indexes (that is, P(n)) of the M resources are {1, 3, 6, 11, 14, 16}, and M elements (that is, S(n)) of the second sequence are {S(1), S(2), S(3), S(4), S(5), S(6)}.

For example, the sorted M resources may be obtained by sorting the M resources in descending order based on the numbers. For example, numbers corresponding to the obtained sorted M resources are {6, 5, 4, 3, 2, 1}. For example, the sorted M elements may be obtained by sorting the M elements in descending order based on the numbers. For example, the obtained sorted M elements are {S(6), S(5), S(4), S(3), S(2), S(1)}.

Therefore, the terminal device may map a k^{th} element in the sorted M elements to a k^{th} element in the sorted M resources, for example, k= 1. To be specific, the terminal device maps a 1^{st} element in the sorted M elements to a 1^{st} element in the sorted M resources, that is, maps S(6) to a resource whose number is 6. For another example, k=2, that is, the terminal device maps a 2^{nd} element in the sorted M elements to a 2^{nd} element in the sorted M resources, that is, maps S(5) to a resource whose number is 5, and so on.

H2: The sequence of sorting the M resources is different from the sequence of sorting the M elements.

H2-1: A sequence of sorting the indexes of the M resources is different from a sequence of sorting the numbers of the M elements.

H2-1-1: The indexes of the M resources are sorted in ascending order, and the numbers of the M elements are sorted in descending order.

For example, M=6, numbers (that is, n) of the M resources are {1, 2, 3, 4, 5, 6}, indexes (that is, P(n)) of the M resources are {1, 3, 6, 11, 14, 16}, and M elements (that is, S(n)) of the second sequence are {S(1), S(2), S(3), S(4), S(5), S(6)}.

For example, the sorted M resources may be obtained by sorting the M resources in ascending order based on the indexes. For example, indexes corresponding to the obtained sorted M resources are {1, 3, 6, 11, 14, 16}. For example, the sorted M elements may be obtained by sorting the M elements in descending order based on the numbers. For example, the obtained sorted M elements are {S(6), S(5), S(4), S(3), S(2), S(1)}.

Therefore, the terminal device may map a k^{th} element in the sorted M elements to a k^{th} element in the sorted M resources, for example, k=1. To be specific, the terminal device maps a 1^{st} element in the sorted M elements to a 1^{st} element in the sorted M resources, that is, maps S(6) to a resource whose index is 1. For another example, k=2, that is, the terminal device maps a 2^{nd} element in the sorted M elements to a 2^{nd} element in the sorted M resources, that is, maps S(5) to a resource whose index is 3, and so on.

H2-1-2: The indexes of the M resources are sorted in descending order, and the numbers of the M elements are sorted in ascending order.

For example, M=6, numbers (that is, n) of the M resources are {1, 2, 3, 4, 5, 6}, indexes (that is, P(n)) of the M resources are {1, 3, 6, 11, 14, 16}, and M elements (that is, S(n)) of the second sequence are {S(1), S(2), S(3), S(4), S(5), S(6)}.

For example, the sorted M resources may be obtained by sorting the M resources in descending order based on the indexes. For example, indexes corresponding to the obtained sorted M resources are {16, 14, 11, 6, 3, 1}. For example, the sorted M elements may be obtained by sorting the M elements in ascending order based on the numbers. For example, the obtained sorted M elements are {S(1), S(2), S(3), S(4), S(5), S(6)}.

Therefore, the terminal device may map a k^{th} element in the sorted M elements to a k^{th} element in the sorted M resources, for example, k=1. To be specific, the terminal device maps a 1^{st} element in the sorted M elements to a 1^{st} element in the sorted M resources, that is, maps S(1) to a resource whose index is 16. For another example, k=2, that is, the terminal device maps a 2^{nd} element in the sorted M elements to a 2^{nd} element in the sorted M resources, that is, maps S(2) to a resource whose index is 14, and so on.

H2-2: A sequence of sorting the numbers of the M resources is the same as a sequence of sorting the numbers of the M elements.

H2-2-1: The numbers of the M resources are sorted in ascending order, and the numbers of the M elements are sorted in descending order.

For example, M=6, numbers (that is, n) of the M resources are {1, 2, 3, 4, 5, 6}, indexes (that is, P(n)) of the M resources are {1, 3, 6, 11, 14, 16}, and M elements (that is, S(n)) of the second sequence are {S(1), S(2), S(3), S(4), S(5), S(6)}.

For example, the sorted M resources may be obtained by sorting the M resources in ascending order based on the numbers. For example, numbers corresponding to the obtained sorted M resources are {1, 2, 3, 4, 5, 6}. For example, the sorted M elements may be obtained by sorting the M elements in descending order based on the numbers. For example, the obtained sorted M elements are {S(6), S(5), S(4), S(3), S(2), S(1)}.

Therefore, the terminal device may map a k^{th} element in the sorted M elements to a k^{th} element in the sorted M resources, for example, k=1. To be specific, the terminal device maps a 1^{st} element in the sorted M elements to a 1^{st} element in the sorted M resources, that is, maps S(6) to a resource whose number is 1. For another example, k=2, that is, the terminal device maps a 2^{nd} element in the sorted M elements to a 2^{nd} element in the sorted M resources, that is, maps S(5) to a resource whose number is 2, and so on.

H2-2-2: The numbers of the M resources are sorted in descending order, and the numbers of the M elements are sorted in ascending order.

For example, M=6, numbers (that is, n) of the M resources are {1, 2, 3, 4, 5, 6}, indexes (that is, P(n)) of the M resources are {1, 3, 6, 11, 14, 16}, and M elements (that is, S(n)) of the second sequence are {S(1), S(2), S(3), S(4), S(5), S(6)}.

For example, the sorted M resources may be obtained by sorting the M resources in descending order based on the numbers. For example, numbers corresponding to the obtained sorted M resources are {6, 5, 4, 3, 2, 1}. For example, the sorted M elements may be obtained by sorting the M elements in ascending order based on the numbers. For example, the obtained sorted M elements are {S(1), S(2), S(3), S(4), S(5), S(6)}.

Therefore, the terminal device may map a k^{th} element in the sorted M elements to a k^{th} element in the sorted M resources, for example, k=1. To be specific, the terminal device maps a 1^{st} element in the sorted M elements to a 1^{st} element in the sorted M resources, that is, maps S(1) to a resource whose number is 6. For another example, k=2, that is, the terminal device maps a 2^{nd} element in the sorted M elements to a 2^{nd} element in the sorted M resources, that is, maps S(2) to a resource whose number is 5, and so on.

If the M elements or the M resources are sorted based on the numbers, before sorting, the M elements and the M resources are respectively represented as *S(n)* and *P(n),* the sorted M elements may be represented as ${S \left(n\right)}^{˜}$ or *S*(*h*(*n*))*,* and the sorted M resources may be represented as ${P \left(n\right)}^{˜}$ or *P*(*h*(*n*))*. h*(*n*) represents a result obtained by sorting the numbers n of the M elements or the numbers n of the M resources.

If the sequence of the numbers n of the sorted M resources is the same as the sequence of the numbers n of the M resources, or the sequence of the numbers n of the sorted M elements is the same as the sequence of the numbers n of the M elements, *h*(*n*) *= n,* where 0 ≤ *n* ≤ *N_{H} -* 1, and *N_{H}* represents the numbers of the M elements or a quantity of the numbers of the M resources, or may be considered as a quantity of values of n.

If the sequence of the numbers n of the sorted M resources is different from the sequence of the numbers n of the M resources, or the sequence of the numbers n of the sorted M elements is different from the sequence of the numbers n of the M elements, *h(n) = N_{H} -* 1 *- n,* where 0 ≤ *n* ≤ *N_{H}* - 1.

If the sequence of the sorted M elements ${S \left(n\right)}^{˜}$ is the same as the sequence of the M elements *S(n),* ${S \left(n\right)}^{˜} = S \left(n\right)$*, where 0≤n≤N_{S} - 1*. In this case, ${S \left(n\right)}^{˜}$ may be understood as being formed by sorting S(*n*) in ascending order of n. *N_{S}* represents a length of S(n). Because a length of ${S \left(n\right)}^{˜}$ is the same as the length of S(n), *N_{S}* may also represent the length of ${S \left(n\right)}^{˜}$*.*

If the sequence of the sorted M elements ${S \left(n\right)}^{˜}$ is different from the sequence of the M elements *S(n),* ${S \left(n\right)}^{˜} = S \left({N}_{S}-1-n\right)$*,* where *0*≤*n*≤*N_{S} - 1*, *and N_{S} = N_{H}.* ${S \left(n\right)}^{˜}$ may also be understood as being formed by sorting S(*n*) in descending order of n.

If the sequence of the sorted M resources ${P \left(n\right)}^{˜}$ is the same as the sequence of the M resources *P*(*n*), ${P \left(n\right)}^{˜} = P \left(n\right)$*, where 0*≤*n*≤*N_{P} - 1*. In this case, ${P \left(n\right)}^{˜}$ may also be understood as being formed by sorting *P(n)* in ascending order of n. *N_{P}* represents a length of P(n). Because a length of ${P \left(n\right)}^{˜}$ is the same as the length of P(n), *N_{P}* may also represent the length of ${P \left(n\right)}^{˜}$*.*

If the sequence of the sorted M resources ${P \left(n\right)}^{˜}$ is different from the sequence of the M resources *P(n),* ${P \left(n\right)}^{˜} = P \left({N}_{P}-1-n\right)$, where *0*≤*n*≤*N_{P} - 1, and Nₚ = N_{H}.* In this case, ${P \left(n\right)}^{˜}$ may be understood as being formed by sorting *P*(*n*) in descending order of n.

After obtaining ${S \left(n\right)}^{˜}$ and ${P \left(n\right)}^{˜}$*,* the terminal device may perform amplitude and phase scaling factor scaling processing (including cyclic shift) on ${S \left(n\right)}^{˜}$, and sequentially map the processed ${S \left(n\right)}^{˜}$ to a first resource corresponding to ${p}_{0} + c \times {P \left(n\right)}^{˜}$ or ${P \left(n\right)}^{˜}$*.* A sequence mapped to a non-first resource (that is, another resource) is an all-0 sequence. Indexes of the amplitude and phase scaling factor sequence *scalingfactor*(*n*) are sorted according to a sorting rule to obtain ${scalingfactor \left(n\right)}^{˜}$, and ${scalingfactor \left(n\right)}^{˜}$ satisfies: ${scalingfactor \left(n\right)}^{˜} = scaliingfactor \left(n\right)$ , where *0*≤*n*≤*N_{sf} - 1, N_{H} = N_{sf}* , and *N_{sf}* is a length of *scalingfactor*(*n*). Because lengths of ${scalingfactor \left(n\right)}^{˜}$ and *scalingfactor*(*n*) are the same, *N_{sf}* may also represent the length of ${scalingfactor \left(n\right)}^{˜}$.

A sequence length of $P \left(n\right) / {P \left(n\right)}^{˜}$ is *N_{P},* a sequence length of $S \left(n\right) / {S \left(n\right)}^{˜}$ is N_{S}, and a sequence length of $scalingfactor \left(n\right) / {scalingfactor \left(n\right)}^{˜}$ is *N_{sf},* where N_{S} *= N_{P} = N_{sf}.*

If a sequence of the sorted amplitude and phase scaling factor sequence is the same as a sequence of the amplitude and phase scaling factor sequence, ${scalingfactor \left(n\right)}^{˜} = scaliingfactor \left(n\right)$ ; or if a sequence of the sorted amplitude and phase scaling factor sequence is different from a sequence of the amplitude and phase scaling factor sequence, ${scaliingfactor \left(n\right)}^{˜} = scaliingfactor \left({N}_{sf}-1-n\right)$*.*

In this way, the sorted reference signal sequence ${S \left(n\right)}^{˜}$ is sequentially mapped to the sorted reference signal resources ${P \left(n\right)}^{˜}$*.* When the M indexes are relative indexes or absolute indexes, specific representations of ${S \left(n\right)}^{˜}$ and ${P \left(n\right)}^{˜}$ may be different. The following provides descriptions in different cases.

Case 1: The second sequence *P(n)* (or described as the first position information) indicates relative position information of the first resource. Relative indexes of the sorted first resource are a sequence ${P \left(n\right)}^{˜}$*,* and absolute indexes of the sorted first resource are a sequence ${p}_{0} + c \times {P \left(n\right)}^{˜}$ . A mapping relationship between the sorted second sequence ${S \left(n\right)}^{˜}$ and the sorted first resource ${P \left(n\right)}^{˜}$ satisfies the following relationship (25): $A \left({p}_{0}+c\times {P \left(n\right)}^{˜}\right) = \left\{\begin{matrix}{scalingfactor \left(n\right)}^{˜} \times {S \left(n\right)}^{˜} & 0 \leq n \leq {N}_{S} - 1 \\ 0 & otherwise\end{matrix}, where c=\left\{\begin{matrix}1 & {p}_{0} \leq {p}_{start} \\ - 1 & {p}_{0} \geq {p}_{end}\end{matrix}\right.\right.$ (25)

The foregoing formula (25) may indicate that S(n) is mapped to ${p}_{0} + c \times {P \left(n\right)}^{˜}$ through amplitude and phase scaling scalingfactor(n) and sorting.$A \left({p}_{0}+c\times {P \left(n\right)}^{˜}\right)$ represents a reference signal sequence corresponding to the sorted second sequence ${S \left(n\right)}^{˜}$ mapped to the sorted first resource (that is, an absolute index representation sequence $\left.{p}_{0}+c\times {P \left(n\right)}^{˜}\right)$*,* and *otherwise* represents a resource (for example, another resource) other than a resource used to map a reference signal.

Case 2: The second sequence *P(n)* (or described as the first position information) indicates absolute position information of the first resource. Absolute indexes of the sorted first resource are a sequence ${P \left(n\right)}^{˜}$*.* A mapping relationship between the sorted second sequence ${S \left(n\right)}^{˜}$ and the sorted first resource ${P \left(n\right)}^{˜}$ satisfies the following relationship (26): $A \left({P \left(n\right)}^{˜}\right) = \left\{\begin{matrix}{scalingfactor \left(n\right)}^{˜} \times {S \left(n\right)}^{˜} & 0 \leq n \leq {N}_{S} - 1 \\ 0 & otherwise\end{matrix}\right.$ (26)

The foregoing formula (26) may indicate that S(n) is mapped to ${P \left(n\right)}^{˜}$ through amplitude and phase scaling scalingfactor(n) and sorting.$A \left({P \left(n\right)}^{˜}\right)$ represents a reference signal sequence corresponding to the sorted second sequence ${S \left(n\right)}^{˜}$ mapped to the sorted first resource ${P \left(n\right)}^{˜}$*,* and *otherwise* represents a resource (for example, another resource) other than a resource used to map a reference signal.$A \left({P \left(n\right)}^{˜}\right)$ or *S*(*n*) may be at a port level. *S*(*n*) may alternatively be at a port group level.

It may be understood that, relatively, the formula (23) and the formula (24) are mapping relationships that are satisfied before the second sequence S(n) and the first position information P(n) are sorted, and the formula (25) and the formula (26) are mapping relationships that are satisfied after the second sequence S(n) and the first position information P(n) are sorted.

The following specifically uses an example to describe how to map the second sequence to the first resource. It should be noted that the following describes an example in which a sorting manner of the M resources is a sorting manner of the numbers (that is, n) of the M resources, and P(n) represents the M relative indexes. ${p}_{0} + c \times {P \left(n\right)}^{˜}$ represents a corresponding absolute index. In addition, in the following examples, the sequence length of $P \left(n\right) / {P \left(n\right)}^{˜}$ is *N_{P},* the sequence length of $S \left(n\right) / {S \left(n\right)}^{˜}$ is N_{S}, and the sequence length of *scalingfactor*(*n*)/ ${scalingfactor \left(n\right)}^{˜}$ is *N_{sf},* where N_{S} *= N_{P} = N_{sf}.* In the following examples (for example, the following examples in Table 3 to Table 10), both lengths of ${P \left(n\right)}^{˜}$ and ${S \left(n\right)}^{˜}$ are N_{S}.

When *p*₀*=pₛₜₐᵣₜ*, ${S \left(n\right)}^{˜} = S \left(n\right)$*,* ${P \left(n\right)}^{˜} = P \left(n\right)$, ${scalingfactor \left(n\right)}^{˜} = scaliingfactor \left(n\right)$ , and c = 1, ${S \left(n\right)}^{˜}$ and ${p}_{0} + c \times {P \left(n\right)}^{˜}$ may satisfy the relationship shown in Table 3.

**Table 3**

| n | ${p}_{0} + c \times {P \left(n\right)}^{˜}$ | ${P \left(n\right)}^{˜}$ | ${S \left(n\right)}^{˜}$ |
|---|---|---|---|
| 0 | *pₛₜₐᵣₜ + P*(0) | *P*(0) | *S*(0) |
| 1 | *pₛₜₐᵣₜ + P*(1) | *P*(1) | *S*(1) |
| 2 | *pₛₜₐᵣₜ + P*(2) | *P*(2) | *S*(2) |
| 3 | *pₛₜₐᵣₜ + P*(3) | *P*(3) | *S*(3) |
| 4 | *pₛₜₐᵣₜ + P*(4) | *P*(4) | *S*(4) |
| ... | ... | ... | ... |
| *N_{S}* - 1 | *pₛₜₐᵣₜ + P*(*N_{S} -* 1) | *P*(*N_{S} -* 1) | *S*(*N_{S} -* 1) |

When *p*₀*=p*_{*en*d} and ${S \left(n\right)}^{˜} = S \left(n\right) , {P \left(n\right)}^{˜} = P \left(n\right) , {scalingfactor \left(n\right)}^{˜} = scaliingfactor \left(n\right)$ , *and c =* -1, ${S \left(n\right)}^{˜}$ and ${p}_{0} + c \times {P \left(n\right)}^{˜}$ satisfy the relationship shown in Table 4.

**Table 4**

| n | ${p}_{0} + c \times {P \left(n\right)}^{˜}$ | ${P \left(n\right)}^{˜}$ | ${S \left(n\right)}^{˜}$ |
|---|---|---|---|
| 0 | *p_{end} - P*(0) | *P*(0) | *S*(0) |
| 1 | *p_{end} - P*(1) | *P*(1) | *S*(1) |
| 2 | *p_{end} - P*(2) | *P*(2) | *S*(2) |
| 3 | *p_{end}* - *P*(3) | *P*(3) | *S*(3) |
| 4 | *p_{end}* - *P*(4) | *P*(4) | *S*(4) |
| ... | ... | ... | ... |
| *N_{S}* - 1 | *p_{end} - P*(*N_{S} -* 1) | *P*(*N_{S}* - 1) | *S*(*N_{S} -* 1) |

When *p*₀*=pₛₜₐᵣₜ* , ${S \left(n\right)}^{˜} = S \left({N}_{S}-1-n\right) , {P \left(n\right)}^{˜} = P \left({N}_{P}-1-n\right)$*,* ${scalingfactor \left(n\right)}^{˜} = scaliingfactor \left({N}_{sf}-1-n\right)$, and *c* = 1, ${S \left(n\right)}^{˜}$ and ${p}_{0} + c \times {P \left(n\right)}^{˜}$ satisfy the relationship shown in Table 5.

**Table 5**

| n | ${p}_{0} + c \times {P \left(n\right)}^{˜}$ | ${P \left(n\right)}^{˜}$ | ${S \left(n\right)}^{˜}$ |
|---|---|---|---|
| 0 | *pₛₜₐᵣₜ + P*(*N_{S} -* 1) | *P*(*N_{S}* - 1) | *S*(*N_{S}* - 1) |
| 1 | *pₛₜₐᵣₜ + P*(*N_{S} -* 2) | *P*(*N_{S} -* 2) | *S*(*N_{S} -* 2) |
| 2 | *pₛₜₐᵣₜ + P*(*N_{S} -* 3) | *P*(*N_{S} -* 3) | *S*(*N_{S} -* 3) |
| 3 | *pₛₜₐᵣₜ + P*(*N_{S} -* 4) | *P*(*N_{S} -* 4) | *S*(*N_{S} -* 5) |
| 4 | *pₛₜₐᵣₜ + P*(*N_{S} -* 5) | *P*(*N_{S} -* 5) | *S*(*N_{S} -* 6) |
| ... | ... | ... | ... |
| *N_{S}* - 1 | *pₛₜₐᵣₜ + P*(0) | *P*(0) | *S*(0) |

When *p*₀*=p*_{*en*d} , ${S \left(n\right)}^{˜} = S \left({N}_{S}-1-n\right) , {P \left(n\right)}^{˜} = P \left({N}_{P}-1-n\right)$, ${scalingfactor \left(n\right)}^{˜} = scaliingfactor \left({N}_{sf}-1-n\right)$*,* and *c =* -1 *,* ${S \left(n\right)}^{˜}$ and ${p}_{0} + c \times {P \left(n\right)}^{˜}$ satisfy the relationship shown in Table 6.

**Table 6**

| n | ${p}_{0} + c \times {P \left(n\right)}^{˜}$ | ${P \left(n\right)}^{˜}$ | ${S \left(n\right)}^{˜}$ |
|---|---|---|---|
| 0 | *p_{end} - P*(*N_{S} -* 1) | *P*(*N_{S}* - 1) | *S*(*N_{S} -* 1) |
| 1 | *p_{end} - P*(*N_{S} -* 2) | *P*(*N_{S}* - 2) | *S*(*N_{S}* - 2) |
| 2 | *p_{end} - P*(*N_{S} -* 3) | *P*(*N_{S} -* 3) | *S*(*N_{S} -* 3) |
| 3 | *p_{end} - P*(*N_{S} -* 4) | *P*(*N_{S} -* 4) | *S*(*N_{S} -* 5) |
| 4 | *p_{end} - P*(*N_{S} -* 5) | *P*(*N_{S}* - 5) | *S*(*N_{S}* - 6) |
| ... | ... | ... | ... |
| *N_{S}* - 1 | *p_{end} - P*(0) | *P*(0) | *S*(0) |

When *p*₀=*p*ₛₜₐᵣₜ , ${S \left(n\right)}^{˜} = S \left(n\right) , {P \left(n\right)}^{˜} = P \left({N}_{P}-1-n\right) , {scalingfactor \left(n\right)}^{˜} =$*,* $scaliingfactor \left(n\right)$, and *c* = 1, ${S \left(n\right)}^{˜}$ and ${p}_{0} + c \times {P \left(n\right)}^{˜}$ satisfy the relationship shown in Table 7.

**Table 7**

| n | ${p}_{0} + c \times {P \left(n\right)}^{˜}$ | ${P \left(n\right)}^{˜}$ | ${S \left(n\right)}^{˜}$ |
|---|---|---|---|
| 0 | *pₛₜₐᵣₜ + P*(*N_{S} -* 1) | *P*(*N_{S}* - 1) | *S*(0) |
| 1 | *pₛₜₐᵣₜ + P*(*N_{S} -* 2) | *p*(*N_{S} -* 2) | *S*(1) |
| 2 | *pₛₜₐᵣₜ + P*(*N_{S} -* 3) | *P*(*N_{S} -* 3) | *S*(2) |
| 3 | *pₛₜₐᵣₜ + P*(*N_{S} -* 4) | *P*(*N_{S} -* 4) | *S*(3) |
| 4 | *pₛₜₐᵣₜ + P*(*N_{S} -* 5) | *P*(*N_{S} -* 5) | *S*(4) |
| ... | ... | ... | ... |
| *N_{S}* - 1 | *pₛₜₐᵣₜ + P*(0) | *P*(0) | *S*(*N_{S} -* 1) |

When *p*₀*=p_{end},* ${S \left(n\right)}^{˜} = S \left(n\right) , {P \left(n\right)}^{˜} = {P \left(n\right)}^{˜} = P \left({N}_{P}-1-n\right) , {scalingfactor \left(n\right)}^{˜} = scaliingfactor \left(n\right)$ , and *c =* -1, ${S \left(n\right)}^{˜}$ and ${p}_{0} + c \times {P \left(n\right)}^{˜}$ satisfy the relationship shown in Table 8.

**Table 8**

| n | ${p}_{0} + c \times {P \left(n\right)}^{˜}$ | ${P \left(n\right)}^{˜}$ | ${S \left(n\right)}^{˜}$ |
|---|---|---|---|
| 0 | *p_{end} - P*(*N_{S} -* 1) | *P*(*N_{S} -* 1) | *S*(0) |
| 1 | *p_{end} - P*(*N_{S} -* 2) | *P*(*N_{S} -* 2) | *S*(1) |
| 2 | *p_{end} - P*(*N_{S} -* 3) | *P*(*N_{S} -* 3) | *S*(2) |
| 3 | *p_{end} - P*(*N_{S} -* 4) | *P*(*N_{S} -* 4) | *S*(3) |
| 4 | *p_{end} - P*(*N_{S} -* 5) | *P*(*N_{S} -* 5) | *S*(4) |
| ... | ... | ... | ... |
| *N_{S}* - 1 | *p_{end} - P*(0) | *P*(0) | *S*(*N_{S}* - 1) |

When *p*₀*=pₛₜₐᵣₜ* , ${S \left(n\right)}^{˜} = S \left({N}_{S}-1-n\right) , {P \left(n\right)}^{˜} = P \left(n\right) , {scalingfactor \left(n\right)}^{˜} =$ $scaliingfactor \left({N}_{Sf}-1-n\right)$, and *c* = 1, ${S \left(n\right)}^{˜}$ and ${p}_{0} + c \times {P \left(n\right)}^{˜}$ satisfy the relationship shown in Table 9.

**Table 9**

| n | ${p}_{0} + c \times {P \left(n\right)}^{˜}$ | ${P \left(n\right)}^{˜}$ | ${S \left(n\right)}^{˜}$ |
|---|---|---|---|
| 0 | *pₛₜₐᵣₜ* + *P*(0) | *P*(0) | *S*(*N_{S} -* 1) |
| 1 | *pₛₜₐᵣₜ + P*(1) | *P*(1) | *S*(*N_{S}* - 2) |
| 2 | *pₛₜₐᵣₜ + P*(2) | *P*(2) | *S*(*N_{S}* - 3) |
| 3 | *pₛₜₐᵣₜ + P*(3) | *P*(3) | *S*(*N_{S}* - 5) |
| 4 | *pₛₜₐᵣₜ* + *P*(4) | *P*(4) | *S*(*N_{S} -* 6) |
| ... | ... | ... | ... |
| *N_{S}* - 1 | *pₛₜₐᵣₜ + P*(*N_{S} -* 1) | *P*(*N_{S}* - 1) | *S*(0) |

When *p*₀*=p*_{*en*d} , ${S \left(n\right)}^{˜} = S \left({N}_{S}-1-n\right) , {P \left(n\right)}^{˜} = P \left(n\right) , {scalingfactor \left(n\right)}^{˜} =$ $scaliingfactor \left({N}_{Sf}-1-n\right)$*,* and *c* = -1, ${S \left(n\right)}^{˜}$ and ${p}_{0} + c \times {P \left(n\right)}^{˜}$ satisfy the relationship shown in Table 10.

**Table 10**

| n | ${p}_{0} + c \times {P \left(n\right)}^{˜}$ | ${P \left(n\right)}^{˜}$ | ${S \left(n\right)}^{˜}$ |
|---|---|---|---|
| 0 | *p_{end} - P*(0) | *P*(0) | *S*(*N_{S} -* 1) |
| 1 | *p_{end} - P*(1) | *P*(1) | *S*(*N_{S} -* 2) |
| 2 | *p_{end} - P*(2) | *P*(2) | *S*(*N_{S} -* 3) |
| 3 | *p_{end} - P*(3) | *P*(3) | *S*(*N_{S}* - 5) |
| 4 | *p_{end} - P*(4) | *P*(4) | *S*(*N_{S}* - 6) |
| ... | ... | ... | ... |
| *N_{S} -*1 | *p_{end} - P*(*N_{S} -* 1) | *P*(*N_{S}* - 1) | *S*(0) |

The terminal device may map the second sequence to the corresponding first resource according to any one of Table 3 to Table 10. It should be noted that Table 3 to Table 10 are merely examples, and how the second sequence is mapped to the first resource is not limited in embodiments of this application.

S1206: The terminal device sends the first reference signal to the network device on the first resource. Correspondingly, the network device receives, on the first resource, a received signal of the first reference signal from the terminal device. In this way, the network device estimates a channel based on the received signal of the first reference signal and the first reference signal.

It should be understood that S1206 is an optional step, and is shown by using a dashed line in FIG. 12.

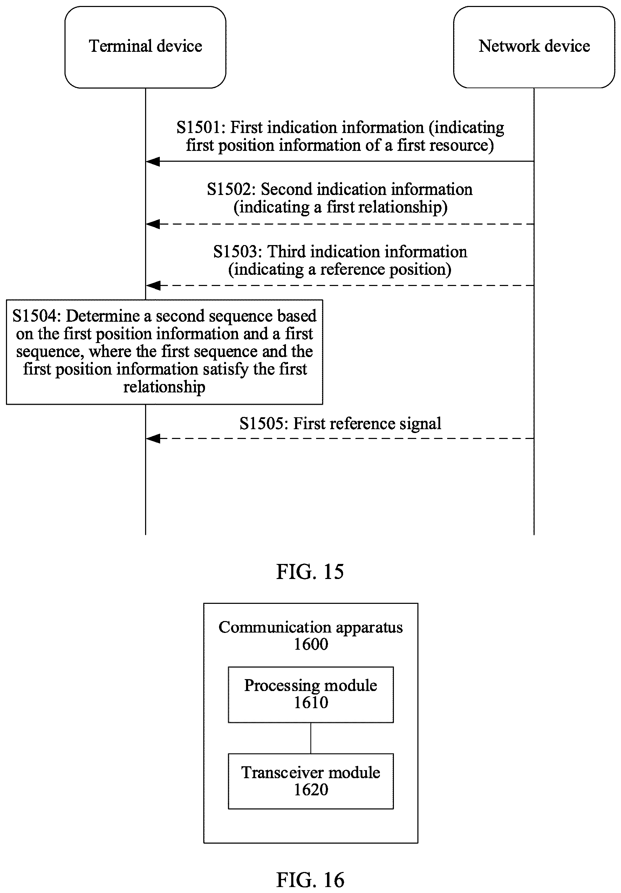

The embodiment shown in FIG. 12 is described by using an example in which the uplink reference signal is generated. The communication method provided in this embodiment of this application may further be used to generate a downlink reference signal. The following describes a communication method provided in an embodiment of this application with reference to a diagram of a communication method shown in FIG. 15. FIG. 15 describes a process of generating a downlink reference signal.

S1501: A network device sends first indication information to a terminal device. Correspondingly, the terminal device receives the first indication information from the network device.

The first indication information indicates first position information of a first resource. For sending of the first indication information, content of the first indication information, and content of the first resource, refer to the content described in FIG. 12. Repeated content is not listed again.

S1502: The network device sends second indication information to the terminal device. Correspondingly, the terminal device receives the second indication information from the network device.

The second indication information indicates a first relationship. For sending of the second indication information, content of the second indication information, and content of the first relationship, refer to the content described in FIG. 12. Repeated content is not listed again.

S1503: The network device sends third indication information to the terminal device. Correspondingly, the terminal device receives the third indication information from the network device.

The third indication information indicates a reference position. For sending of the third indication information, content of the third indication information, and content of the reference position, refer to the content described in FIG. 12. Repeated content is not listed again.

It should be understood that S1502 and S1503 are optional steps, and are shown by using dashed lines in FIG. 15.

S1504: The terminal device determines a second sequence based on the first position information and a first sequence, where the first sequence and the first position information satisfy the first relationship.

For a manner in which the terminal device determines the second sequence, refer to the foregoing content of determining the second sequence by the terminal device in FIG. 12. Repeated content is not listed again.

S1505: The network device sends a first reference signal to the terminal device on the first resource. Correspondingly, the terminal device receives, on the first resource, a received signal of the first reference signal from the network device. In this way, the terminal device estimates a channel based on the received signal of the first reference signal and the first reference signal. The first reference signal is determined by the terminal device based on the second sequence. Alternatively, it may be described as that the terminal device estimates a channel based on the received signal of the first reference signal and the second sequence.

It should be understood that S1505 is an optional step, and is shown by using a dashed line in FIG. 15.

In the foregoing embodiments provided in this application, the method provided in embodiments of this application is described by using an example in which the network device and the terminal device perform the method. In this application, embodiments may be independently implemented or may be implemented in combination based on some internal relationships. In each embodiment, different implementations may be implemented in combination or independently. To implement the functions in the method provided in embodiments of this application, the steps performed by the terminal device may be implemented by different functional entities that form the terminal device. Steps performed by the network device may be implemented by different functional entities included in the network device. For example, the network device may be in a CU-DU architecture, the CU may generate the first indication information, and the DU may send the first indication information. To implement functions in the method provided in the foregoing embodiments of this application, the terminal device and the network device may include a hardware structure and/or a software module, and the foregoing functions are implemented in a form of a hardware structure, a software module, or a hardware structure plus a software module. Whether a function in the foregoing functions is performed by using the hardware structure, the software module, or the combination of the hardware structure and the software module depends on particular applications and design constraints of the technical solutions.

An embodiment of this application provides a communication apparatus. FIG. 16 is a diagram of a structure of a communication apparatus according to an embodiment of this application. The communication apparatus may be configured to implement a function of the terminal device or the network device in the foregoing method embodiments. Therefore, beneficial effects of the foregoing method embodiments can also be implemented. In embodiments of this application, the communication apparatus may be the terminal device in any one of FIG. 1 and FIG. 7 to FIG. 11, or may be the network device in FIG. 1, or the access network device and/or the core network device in any one of FIG. 7 to FIG. 11, or may be a module (for example, a chip) applied to the terminal device, the access network device, or the core network device.

As shown in FIG. 16, a communication apparatus 1600 includes a processing module 1610 and a transceiver module 1620. The communication apparatus 1600 is configured to implement the functions of the terminal device or the network device in the method embodiment shown in FIG. 12 or FIG. 15.

In a first embodiment, when the communication apparatus 1600 is configured to implement the function of the terminal device in the method embodiment shown in FIG. 12, the transceiver module 1620 may be configured to receive first indication information, and the processing module 1610 may be configured to perform step S1204. Optionally, the processing module 1610 may be further configured to perform the step S1205, and the transceiver module 1620 may be further configured to receive second indication information and third indication information, send a first reference signal, and the like.

In a second embodiment, when the communication apparatus 1600 is configured to implement the function of the network device in the method embodiment shown in FIG. 12, the transceiver module 1620 may be configured to send first indication information under control of the processing module 1610. Optionally, the transceiver module 1620 may be configured to: send second indication information and third indication information, receive a first reference signal, and the like under control of the processing module 1610.

In a third embodiment, when the communication apparatus 1600 is configured to implement the function of the terminal device in the method embodiment shown in FIG. 15, the transceiver module 1620 may be configured to receive first indication information under control of the processing module 1610. Optionally, the processing module 1610 may be further configured to determine a second sequence. Optionally, the transceiver module 1620 may be configured to receive second indication information, third indication information, and the like under control of the processing module 1610.

In a fourth embodiment, when the communication apparatus 1600 is configured to implement the function of the network device in the method embodiment shown in FIG. 15, the transceiver module 1620 may be configured to send first indication information under control of the processing module 1610. Optionally, the transceiver module 1620 may be configured to send second indication information, third indication information, a first reference signal, and the like under control of the processing module 1610.

For more detailed descriptions of the processing module 1610 and the transceiver module 1620, directly refer to related descriptions in the method embodiment shown in FIG. 12 or FIG. 15. Details are not described herein again.

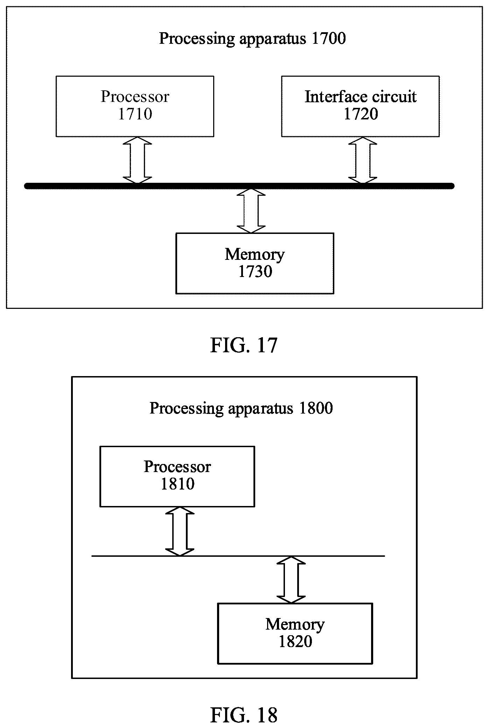

An embodiment of this application provides a processing apparatus. The processing apparatus may have another name. This is not specifically limited in embodiments of this application. FIG. 17 is a diagram of a structure of a processing apparatus according to an embodiment of this application. As shown in FIG. 17, a processing apparatus 1700 includes a processor 1710. Optionally, the processing apparatus 1700 further includes an interface circuit 1720. The processor 1710 and the interface circuit 1720 are coupled to each other. It may be understood that the interface circuit 1720 may be a transceiver or an input/output interface. Optionally, the processing apparatus further includes a memory 1730. The memory 1730 may be configured to store instructions executed by the processor 1710, or store input data required by the processor 1710 to run the instructions, or store data generated after the processor 1710 runs the instructions.

The processing apparatus 1700 may be configured to implement the method shown in FIG. 12 or FIG. 15. In this case, the processor 1710 is configured to implement a function of the processing module 1610, and the interface circuit 1720 is configured to implement a function of the transceiver module 1620.

When the processing apparatus 1700 is a chip used in a terminal device, the chip in the terminal device implements the function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the processing apparatus 1700 is a module used in a network device, the module in the network device implements the function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The network device module herein may be a baseband chip of the network device, or may be a DU or another module. The DU herein may be a DU in an open radio access network (open radio access network, O-RAN) architecture.

Embodiment of this application provide another example of a processing apparatus. The processing apparatus may have another name. This is not specifically limited in embodiments of this application. The processing apparatus includes at least one processor and at least one memory. The at least one processor is coupled to the at least one memory. The at least one memory is configured to store instructions. When the instructions are executed by the at least one processor, the processing apparatus is enabled to perform the method in the foregoing embodiment. For example, the processing apparatus includes one processor and one memory. As shown in FIG. 18, a processing apparatus 1800 includes one processor 1810 and one memory 1820. The processor 1810 is coupled to the memory 1820. The memory 1820 stores instructions. When the instructions stored in the memory 1820 are executed by the processor 1810, the processing apparatus 1800 performs the method performed by the network device or the terminal device in the foregoing embodiments.

It can be understood that the processor in embodiments of this application may be a CPU, or may be another general-purpose processor, a DSP, an ASIC, an FPGA, or another programmable logic device, a transistor logic device, a hardware component, or any combination thereof. The general-purpose processor may be a microprocessor or any regular processor or the like. The memory in this embodiment of this application may include a volatile memory (volatile memory), for example, a random access memory (random access memory, RAM). The memory may further include a nonvolatile memory (nonvolatile memory), for example, a read-only memory (read-only memory, ROM), a flash memory, a hard disk drive (hard disk drive, HDD), or a solid-state drive (solid-state drive, SSD).

The method steps in embodiments of this application may be implemented in hardware, or may be implemented in software instructions executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or a part of the foregoing embodiments may be implemented by using software, hardware, firmware, or any combination thereof. When software is used to implement embodiments, all or a part of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

An embodiment of this application provides a communication system. The communication system includes at least one terminal device and at least one network device. The communication system may implement the communication method shown in FIG. 12 or FIG. 15. For a function of any one of the at least one terminal device, refer to the function of the terminal device described in FIG. 12 or FIG. 15, and for a function of any one of the at least one network device, refer to the function of the network device described in FIG. 12 or FIG. 15.

An embodiment of this application provides a chip system. The chip system includes a processor. The processor is configured to implement the method in any one of FIG. 12 or FIG. 15. Optionally, the chip system further includes an interface. The processor may invoke and run instructions from the interface. When the processor executes the instructions, the method described in FIG. 12 or FIG. 15 is implemented.

An embodiment of this application provides a computer-readable storage medium. The computer-readable storage medium is configured to store a computer program or instructions. When the computer program or the instructions are run, the method in any one of FIG. 12 or FIG. 15 is implemented.

An embodiment of this application provides a computer program product. When the computer program product runs on a computer, the method in any one of FIG. 12 or FIG. 15 is implemented. The computer program product may include a computer program or instructions. When the computer program or the instructions are run on a computer, the method described in FIG. 12 or FIG. 15 is implemented.

In various embodiments of this application, unless otherwise stated or there is a logic conflict, terms and/or descriptions of different embodiments are consistent and may be mutually referenced, and technical features in different embodiments may be combined based on an internal logical relationship thereof to form a new embodiment.

It may be understood that, various numbers in embodiments of this application are merely for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving first indication information, wherein the first indication information indicates first position information of a first resource, and the first resource is used to map a first reference signal; and
determining a second sequence based on the first position information and a first sequence, wherein the first sequence and the first position information satisfy a first relationship, and the second sequence is used to generate the first reference signal.

2. The method according to claim 1, wherein the method further comprises:
receiving second indication information, wherein the second indication information indicates the first relationship.

3. The method according to claim 1 or 2, wherein the first relationship indicates one of the following:
a phase of the first sequence is a quadratic polynomial of the first position information; or
a change rate of a phase of the first sequence with respect to the first position information is a linear polynomial of the first position information.

4. The method according to any one of claims 1 to 3, wherein the first position information comprises:
relative position information of M resources comprised in the first resource; and/or
absolute position information of the M resources comprised in the first resource, wherein M is a positive integer.

5. The method according to claim 4, wherein
the first position information is represented by using a polynomial of degree D, and D is an integer greater than or equal to 1.

6. The method according to claim 5, wherein the first indication information comprises one or more of the following:
a part or all of coefficients of the polynomial of degree D;
a highest degree of the polynomial of degree D; or
a quantity of resources comprised in the first resource.

7. The method according to any one of claims 1 to 6, wherein
the phase of the first sequence is represented by using a polynomial of degree H, and H is an integer greater than or equal to 2.

8. The method according to claim 2, wherein the second indication information comprises one or more of the following:
a part or all of coefficients of a quadratic polynomial;
a root index of the second sequence; or
at least one first parameter, wherein
a phase of the first sequence is the quadratic polynomial of the first position information, and the root index and the at least one first parameter are used to determine the part or all of the coefficients of the quadratic polynomial.

9. The method according to any one of claims 4 to 6, wherein the first position information comprises the relative position information of the M resources comprised in the first resource, and the method further comprises:
receiving third indication information, wherein the third indication information indicates a reference position, and the reference position and the relative position information of the M resources comprised in the first resource are used to determine the absolute position information of the M resources comprised in the first resource.

10. The method according to claim 9, wherein the relative position information indicates M relative indexes of the M resources comprised in the first resource, and the absolute position information indicates M absolute indexes of the M resources comprised in the first resource; and
a value of an index of the reference position is less than or equal to a value of an absolute index of a start position of the first resource, wherein a value of an i^{th} absolute index in the M absolute indexes is a sum of the value of the index of the reference position and a value of an i^{th} relative index in the M relative indexes, and i is an integer greater than or equal to 0; or
a value of an index of the reference position is greater than or equal to a value of an absolute index of an end position of the first resource, wherein a value of an i^{th} absolute index in the M absolute indexes is a difference between the value of the index of the reference position and a value of an i^{th} relative index in the M relative indexes, wherein
i is an integer greater than or equal to 0.

11. The method according to any one of claims 1 to 10, wherein the method further comprises:
mapping a k^{th} element in the second sequence to a k^{th} resource in the first resource, wherein k is a natural number; or
mapping a k^{th} element in the sorted second sequence to a k^{th} resource in the sorted first resource, wherein k is a natural number.

12. The method according to claim 11, wherein
the sorted second sequence is obtained by sorting the second sequence based on numbers of elements; and
the sorted first resource is obtained through sorting based on resource indexes or resource numbers.

13. The method according to any one of claims 1 to 12, wherein the first relationship comprises a relationship between a first parameter set and a second parameter set, the first parameter set is used to generate the first position information, the second parameter set is used to generate the first sequence, and the method further comprises:
determining the second parameter set based on the first parameter set and the first relationship;
determining the first sequence based on the second parameter set; and
determining the second sequence based on the first sequence and the second parameter set.

14. The method according to any one of claims 1 to 13, wherein the method further comprises:
sending the first reference signal on the first resource; or
receiving the first reference signal on the first resource.

15. A communication method, comprising:
receiving first indication information, wherein the first indication information indicates first position information of a first resource, and the first resource is used to map a first reference signal; and
receiving the first reference signal on the first resource, or sending the first reference signal on the first resource, wherein a second sequence corresponding to the first reference signal is associated with a first sequence and the first position information, and the first sequence and the first position information satisfy a first relationship.

16. The method according to claim 15, wherein the method further comprises:
sending second indication information, wherein the second indication information indicates the first relationship.

17. The method according to claim 15 or 16, wherein the first relationship indicates one of the following:
a phase of the first sequence is a quadratic polynomial of the first position information; or
a change rate of a phase of the first sequence with respect to the first position information is a linear polynomial of the first position information.

18. The method according to any one of claims 15 to 17, wherein the first position information comprises:
relative position information of M resources comprised in the first resource; and/or
absolute position information of the M resources comprised in the first resource, wherein M is a positive integer.

19. The method according to claim 18, wherein
the first position information is represented by using a polynomial of degree D, and D is an integer greater than or equal to 1.

20. The method according to claim 19, wherein the first indication information comprises one or more of the following:
a part or all of coefficients of the polynomial of degree D;
a highest degree of the polynomial of degree D; or
a quantity of resources comprised in the first resource.

21. The method according to any one of claims 15 to 20, wherein
the phase of the first sequence is represented by using a polynomial of degree H, and H is an integer greater than or equal to 2.

22. The method according to claim 16, wherein the second indication information comprises one or more of the following:
a part or all of coefficients of a quadratic polynomial;
a root index of the second sequence; or
at least one first parameter, wherein
a phase of the first sequence is the quadratic polynomial of the first position information, and the root index and the at least one first parameter are used to determine the part or all of the coefficients of the quadratic polynomial.

23. The method according to any one of claims 18 to 20, wherein the first position information comprises the relative position information of the resources comprised in the first resource, and the method further comprises:
sending third indication information, wherein the third indication information indicates a reference position, and the reference position and the relative position information of the resources comprised in the first resource are used to determine the absolute position information of the resources comprised in the first resource.

24. The method according to claim 23, wherein the relative position information indicates M relative indexes of the M resources comprised in the first resource, and the absolute position information indicates M absolute indexes of the M resources comprised in the first resource; and
a value of an index of the reference position is less than or equal to a value of an absolute index of a start position of the first resource, wherein a value of an i^{th} absolute index in the M absolute indexes is a sum of the value of the index of the reference position and a value of an i^{th} relative index in the M relative indexes, and i is an integer greater than or equal to 0; or
a value of an index of the reference position is greater than or equal to a value of an absolute index of an end position of the first resource, wherein a value of an i^{th} absolute index in the M absolute indexes is a difference between the value of the index of the reference position and a value of an i^{th} relative index in the M relative indexes, and i is an integer greater than or equal to 0.

25. The method according to any one of claims 15 to 24, wherein the method further comprises:
mapping a k^{th} element in the second sequence to a k^{th} resource in the first resource, wherein k is a natural number; or
mapping a k^{th} element in the sorted second sequence to a k^{th} resource in the sorted first resource, wherein k is a natural number.

26. The method according to claim 25, wherein
the sorted second sequence is obtained by sorting the second sequence based on numbers of elements; and
the sorted first resource is obtained through sorting based on resource indexes or resource numbers.

27. The method according to any one of claims 15 to 26, wherein the first relationship comprises a relationship between a first parameter set and a second parameter set, the first parameter set is used to generate the first position information, the second parameter set is used to generate the first sequence, and the method further comprises:
determining the second parameter set based on the first parameter set and the first relationship;
determining the first sequence based on the second parameter set; and
determining the second sequence based on the first sequence and the second parameter set.

28. A communication apparatus, comprising:
a module configured to perform the method according to any one of claims 1 to 14; or
a module configured to perform the method according to any one of claims 15 to 27.

29. A processing apparatus, comprising a processor and an interface circuit, wherein the interface circuit is configured to receive a signal from an apparatus other than the processing apparatus and transmit the signal to the processor, or send a signal from the processor to an apparatus other than the processing apparatus, and the processor is configured to implement the method according to any one of claims 1 to 14, or implement the method according to any one of claims 15 to 27 by using a logic circuit or executing code instructions.

30. The apparatus according to claim 29, wherein the apparatus is a chip or a chip system.

31. A computer-readable storage medium, wherein the storage medium stores a computer program or instructions, and when the computer program or the instructions are executed by a communication apparatus, the method according to any one of claims 1 to 14, or the method according to any one of claims 15 to 27 is implemented.

32. A computer program product, wherein when the computer program product runs on a computer, the computer is enabled to perform the method according to any one of claims 1 to 14, or the computer is enabled to perform the method according to any one of claims 15 to 27.
